# EUROPEAN PATENT APPLICATION

(11) **EP 4 852 464 A1**
(43) Date of publication of application: **09.12.2026**
(21) Application number: 25846610.1
(22) Date of filing: 13.06.2025
(51) Int. Cl.: H04W 4/021

(54) **METHOD AND APPARATUS FOR POSITIONING PROCESSING IN BUILDING, AND COMPUTER DEVICE, STORAGE MEDIUM AND COMPUTER PROGRAM PRODUCT**

(30) Priority: 02.08.2024 CN 202411059858
(71) Applicant: Tencent Technology (Shenzhen) Company Limited, Shenzhen, Guangdong 518057 (CN)
(72) Inventor: ZHOU, Chanxin, Shenzhen, Guangdong 518057 (CN)
(74) Representative: AWA Sweden AB
(86) International application number: PCT/CN2025/100858
(87) International publication number: WO 2026/026263

(57) **Abstract**

A method for positioning processing in a building, which method is executed by a computer device. The method comprises: acquiring a historical movement trajectory of a positioned object, and identifying stay points from trajectory points included in the historical movement trajectory (302); on the basis of the location of each stay point, positioning a building where the positioned object stays (304); on the basis of a stay time period represented by each stay point and according to scanned wireless network signals and a received satellite positioning signal within the stay time period, determining an effective stay time period within which the positioned object stays indoors (306); and marking a wireless network signal having a signal strength greater than a preset strength within the effective stay time period as a marked wireless network signal in the building, and using a scanning result of the marked wireless network signal as positioning determination information for entering the building (308).

## Description

### RELATED APPLICATION

This application claims priority to Chinese Patent Application No. 2024110598585, filed on August 2, 2024, and entitled "IN-BUILDING POSITIONING PROCESSING METHOD AND APPARATUS, COMPUTER DEVICE, STORAGE MEDIUM, AND COMPUTER PROGRAM PRODUCT", which is incorporated herein by reference in its entirety.

### FIELD OF THE TECHNOLOGY

This application relates to the field of positioning technologies, and in particular, to an in-building positioning processing method and apparatus, a computer device, and a storage medium.

### BACKGROUND OF THE DISCLOSURE

With the development of positioning technology and the increase of applications based on a positioning function. In indoor and outdoor environments, providing reliable position coordinates can deliver better experience to users. Outdoor positioning and position-based services have matured. For example, a global positioning system (GPS) and map-based position services are widely applied. However, in the indoor environment, positioning of an indoor position needs to be implemented by using a dedicated in-building positioning processing technology.

Currently, a solution of an in-building positioning processing technology is based on wireless network communication (Wi-Fi). In such implementations, a signal fingerprint needs to be acquired in advance for an access point disposed in a building. When a positioning object performs indoor positioning (also referred to as in-building positioning) processing, an access point signal in the building needs to be scanned, to determine a position of a to-be-positioned target based on a scanning result and an acquired signal fingerprint. However, as time passes by, an access point signal field in the building changes. Such changes may cause the in-building positioning processing performance to attenuate, thereby affecting the accuracy of the in-building positioning process.

### SUMMARY

This application provides an in-building positioning processing method and apparatus, a computer device, a storage medium, and a computer program product.

In a first aspect, this application provides an indoor positioning processing method. The method includes: obtaining a movement trajectory of a first object, and identifying stay points from the movement trajectory;
determining a building in which the first object stays based on a position of each stay point;
determining an indoor stay time period within a total time period defined by the stay points based on a change in positioning signals of the first object;
recording a relation between the building and a wireless local area network whose signal strength within the indoor stay time period is greater than a strength threshold, the relation being used for indoor positioning.

In a second aspect, this application provides an indoor positioning processing method. The method includes obtaining information of a positioning signal for positioning an object; determining, when the positioning signal is from a wireless local area network, a building associated with the wireless local area network in a recorded relation as a building in which the object is located;
wherein the recorded relation is generated according to the method of various embodiments.

In a third aspect, this application provides an apparatus for indoor positioning. The apparatus includes:
a stay point identification module configured to: obtain a movement trajectory of a first object, and identify stay points from the movement trajectory;
a building positioning module configured to determine a building in which the first object stays based on a position of each stay point;
an indoor time period determination module configured to: determine an indoor stay time period within a total time period defined by the stay points based on a change in positioning signals of the first object; and
a building signal marking module configured to: record a relation between the building and a wireless local area network whose signal strength within the indoor stay time period is greater than a strength threshold, the relation being used for indoor positioning.

In a fourth aspect, this application provides an apparatus for indoor positioning. The apparatus includes:
a positioning signal obtaining module configured to obtain information of a positioning signal for positioning a first object;
a building determination module configured to determine, when the positioning signal is from a wireless local area network, a building associated with the wireless local area network in a recorded relation as a building in which the first object is located;
wherein the recorded relation is generated according to the method of various embodiments+.

In a third aspect, this application further provides a computer device. The computer device includes a memory and a processor. The memory has a computer program stored therein. The processor, when executing the computer program, implements the in-building positioning processing method in any embodiment.

In a sixth aspect, this application further provides a computer-readable storage medium. The computer-readable storage medium has a computer program stored therein. The computer program, when executed by a processor, implements the in-building positioning processing method in any embodiment.

In a seventh aspect, this application further provides a computer program product. The computer program product includes a computer program. The computer program, when executed by a processor, implements the in-building positioning processing method in any embodiment.

The details of one or more embodiments of this application are presented in the accompanying drawings and description below. Other features, objectives, and advantages of this application become apparent from the specification, the drawings, and the claims.

### BRIEF DESCRIPTION OF THE DRAWINGS

For clearer descriptions of the technical solutions according to the embodiments of this application, the drawings required to be used in the embodiments are briefly introduced below. It is apparent that the drawings in the description below are only some embodiments of this application, and it is apparent for those skilled in the art that other drawings can be acquired according to the disclosed drawings without creative efforts.
FIG. 1 is a diagram of an application environment of an in-building positioning processing method in one embodiment.
FIG. 2 is a brief flowchart of binding marking between wireless network signal and a building in one embodiment.
FIG. 3 is a flowchart of an in-building positioning processing method in one embodiment.
FIG. 4 is a schematic diagram of a stay time period in one embodiment.
FIG. 5 is a schematic diagram of a positioning signal source and time information in one embodiment.
FIG. 6 is a schematic diagram of a first stay point and a second stay point according to an embodiment.
FIG. 7 is a schematic flowchart of a method for determining a category-2 stay points in one embodiment.
FIG. 8 is a flowchart of an in-building positioning processing method in another embodiment.
FIG. 9 is a flowchart of an in-building positioning processing method in still another embodiment.
FIG. 10 is a schematic diagram of a building in which a to-be-positioned object is located in one embodiment.
FIG. 11 is a complete flowchart of an in-building positioning processing method in one embodiment.
FIG. 12 is a block diagram of a structure of an in-building positioning processing apparatus in one embodiment.
FIG. 13 is a block diagram of a structure of an in-building positioning processing apparatus in another embodiment.
FIG. 14 is a diagram of an internal structure of a computer device in one embodiment.
FIG. 15 is a diagram of an internal structure of a computer device in another embodiment.

### DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without making creative efforts shall fall within the protection scope of this application.

With the development of positioning technology and the increase of applications run based on a positioning function, positioning plays an increasingly important role in the life. In indoor and outdoor environments, providing reliable position coordinates can bring better experience to users. Outdoor positioning and position-based services have matured. For example, a global positioning system (GPS) and map-based position services are widely applied. However, in the indoor environment, positioning of an indoor position needs to be implemented by using a dedicated in-building positioning processing technology. Currently, clustering may be performed by using a sample with a global positioning system (GPS) as a true value. Since there is a large probability that a GPS signal is acquired outdoors, and a GPS has relatively low positioning accuracy indoors, even if a to-be-positioned user is indoors, a positioning result of the to-be-positioned user is most likely to indicate that the user is outdoors, and a drift of the to-be-positioned user may deviate from a true position to a large extent. Therefore, a solution of a common in-building positioning processing technology is a solution based on Wi-Fi. During specific implementation of the solution, a signal fingerprint needs to be acquired in advance for an access point disposed in a building. When a positioning object performs in-building positioning processing, an access point signal in the building needs to be scanned, to determine a position of a to-be-positioned target based on a scanning result and an acquired signal fingerprint. However, as time passes by, an access point signal field in the building consecutively changes. Such changes may cause the in-building positioning processing performance to consecutively attenuate, thereby affecting the in-building positioning processing accuracy.

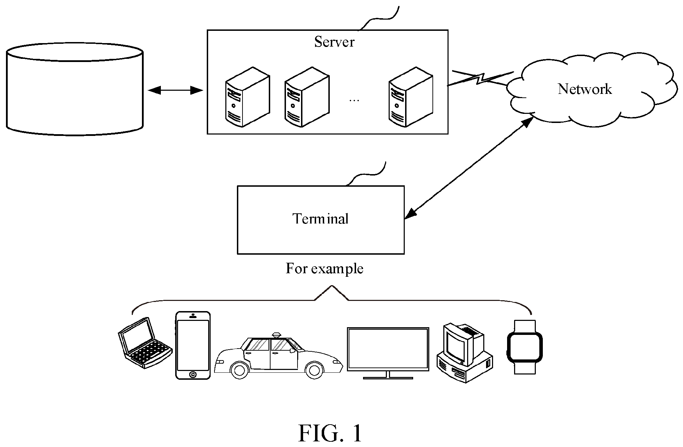

Based on this, an embodiment of this application provides an in-building positioning processing method that can enhance in-building positioning processing efficiency. The in-building positioning processing method provided in this embodiment of this application may be applied to an application environment shown in FIG. 1. A terminal 102 communicates with a server 104 through a network. A data storage system may store data that needs to be processed by the server 104. The data storage system may be integrated on the server 104, or placed on a cloud or other servers.

Specifically, application to the server 104 is used as an example for description. The server 104 obtains a movement trajectory of a positioned object, identifies stay points from trajectory points included in the movement trajectory, then positions, based on a position of each stay point, a building in which the positioned object stays, determines, based on a stay time period represented by the stay points, a wireless network signal scanned within the stay time period and a received satellite positioning signal, a valid stay time period during which the positioned object stays indoors, and finally, marks a wireless network signal with signal strength greater than preset strength within the valid stay time period as a marked wireless network signal of the building, uses a scanning result of the marked wireless network signal as positioning determination information for entering the building. In this application, the movement trajectory may be a historical movement trajectory of the positioned object. Association marking is performed between the building in which the positioned object stays and the marked wireless network signal in the building. Since the marked wireless network signal is marked and confirmed based on signal strength, a signal problem caused by a change of a signal field of the wireless network signal can be avoided, thereby ensuring reliability of marking between the building and the wireless network signal, so that in-building positioning processing can be directly performed based on a reliable scanning result of the wireless network signal, and in-building positioning processing accuracy is enhanced.

Next, application to the terminal 102 is used as an example for description. The terminal 102 obtains positioning signal information of a to-be-positioned object for object positioning, determines, in a case that the positioning signal information is a wireless network signal, a marked wireless network signal matching the to-be-positioned object, determines, based on the in-building positioning processing method described above, a target building through the marked wireless network signal, and finally determines the target building as a building in which the to-be-positioned object is located. Since the marked wireless network signal is marked and confirmed based on signal strength, a signal problem caused by a change of a signal field of the wireless network signal can be avoided, thereby ensuring reliability of marking between the building and the wireless network signal, so that positioning can be directly performed based on a reliable scanning result of the wireless network signal, and in-building positioning processing accuracy can be enhanced.

The terminal 102 may be, but is not limited to, various desktop computers, notebook computers, smart phones, tablet computers, Internet of Things devices, portable wearable devices, smart voice interaction devices, smart home appliances, in-vehicle terminals, and aircrafts. The Internet of Things device may be a smart speaker, a smart television, a smart air condition, a smart in-vehicle device, or the like. The portable wearable device may be a smartwatch, a smart bracelet, a head-mounted device, or the like. The server 104 may be implemented by using an independent server or a server cluster that includes a plurality of servers. The in-building positioning processing method provided in this embodiment of this application may be applied to various scenarios, including, but not limited to, a cloud technology, artificial intelligence, smart transport, assisted driving, and the like.

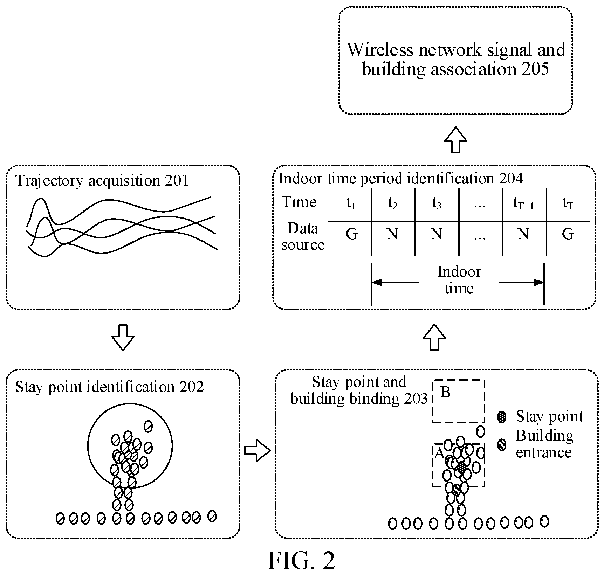

The following describes a brief flow of how to analyze a historical trajectory, to perform binding marking between a wireless network signal and a building. A flowchart shown in FIG. 2 includes trajectory acquisition 201, stay point identification 202, stay point and building binding 203, indoor time period identification 204, and wireless network signal and building association 205.

In the trajectory acquisition 201, positioning data of each positioning-enabled object needs to be acquired first. The positioning-enabled object is an object authorized to obtain the positioning data in real time, for example, a food delivery rider or a courier. Therefore, the positioning data is information and data authorized by an object or fully authorized by all parties, and acquisition, use, and processing of related data need to comply with related laws and regulations and standards of related countries and regions. Based on this, a movement trajectory in a historical period can be obtained by using the positioning data of each positioning-enabled object. The movement trajectory is configured for representing a movement path of the positioning-enabled object, that is, the movement trajectory includes a plurality of consecutive trajectory points. Therefore, the movement trajectory includes a start trajectory point, an end trajectory point, and passed trajectory points.

Moreover, the positioning data of the positioning-enabled object includes feature information corresponding to each trajectory point. The feature information includes at least one of the following: a positioning signal source, position coordinates, time information, a speed, a direction, positioning accuracy, and the like. The positioning signal source is configured for recording source information of the position coordinates of the trajectory point. For example, if the position coordinates of the trajectory point come from a GPS, the positioning signal source of the trajectory point is a satellite positioning signal. Alternatively, the position coordinates of the trajectory point come from Wi-Fi, so that the positioning signal source of the trajectory point is a wireless network signal. The wireless network signal may alternatively be a base station positioning signal, a Bluetooth positioning signal, or the like. This is not limited herein. Similarly, the position coordinates are a core part of the feature information. The position coordinates indicate a specific position of the positioning-enabled object on the earth. In this embodiment, the position coordinates specifically include a longitude and a latitude. The time information is a time stamp of acquiring the position coordinates of the trajectory point.

Next, in a case that the positioning signal source of the trajectory point is the satellite positioning signal, the GPS positioning result carries information such as positioning accuracy, a height, an azimuth, and a speed. Therefore, the feature information may further include a speed. The speed is a movement speed of the positioning-enabled object, and is usually measured in meters/second (m/s). This can help understand a movement state of the positioning-enabled object, for example, whether the positioned object is walking, riding, driving, or staying at a place. Similarly, the feature information may further include a direction. The direction is a movement direction of the positioning-enabled object, and is usually measured in degrees. Moreover, the positioning accuracy in the feature information is specifically a positioning accuracy value. The positioning accuracy value is configured for indicating credibility of the position coordinates of the trajectory point. A smaller positioning accuracy value indicates more accurate position coordinates of the trajectory point.

Thus, in a case that the positioning signal of the trajectory point is the wireless network signal, and the wireless network signal is specifically Wi-Fi, the feature information may further include Wi-Fi information. The Wi-Fi information is media access control (MAC) and a received signal strength (RSS) respectively corresponding to Wi-Fi scanned by the trajectory point of the positioning-enabled object. For example, the Wi-Fi scanned by the positioning-enabled object is [macl, rss1; mac2, rss2; mac3, rss3; ...,].

The positioning data of each positioning-enabled object is acquired, and data cleaning is performed on the positioning data of the positioning-enabled object. For example, the movement trajectory is divided based on a distance threshold, or the movement trajectory is divided based on a time threshold, and the movement trajectory is stored in a database that can be in communicative connection with a server. The database may be configured for subsequent trajectory analysis and positioning.

In the stay point identification 202, in a first step, stay points are determined from the movement trajectory, that is, stay points are identified from the trajectory points included in the movement trajectory. In a second step, a stay time period for which the positioning-enabled object stays indoors is determined by performing upper and lower sliding window processing. There may be two cases as follows: (1) The stay points identified from the trajectory points included in the movement trajectory are determined as a category-1 stay points. (2) Non-candidate stay points: The non-candidate stay points are trajectory points whose feature information does not satisfy a stay point determination condition, and a category-2 stay points is determined by using an upper and lower sliding window processing method. In this case, a time stamp of the category-1 stay points and a time stamp of the category-2 stay points constitute the stay time period.

In the stay point-building binding 203, the stay time period may be determined in the identification process of the stay point identification 202. In this case, stay point position coordinates and building entrance position coordinates need to be calculated based on the position of each stay point, and whether the stay point position coordinates and the building entrance position coordinates are in the same building is verified, to identify the building in which the positioning-enabled object stays. Based on this, in the process of the indoor time period recognition 204, an indoor time period during which the positioning-enabled object stays indoors needs to be determined based on the stay time period represented by the stay points, the wireless network signal scanned within the stay time period, and the received satellite positioning signal. Each stay point is associated with a time point at which the positioning-enabled object is at the stay point. The movement trajectory is formed by stay points, e.g., stay points near the entrance of a building (e.g., when the courier parks a vehicle and unloads parcels) and stay point within the building (e.g., when the courier moves within the building to deliver the parcels to recipients). The indoor time period (also referred to as indoor stay time period) may be determined within the stay time period based on a change in positioning signals of the object. The stay time period is a total time period defined by the stay points, i.e., the time period between the time point of the earliest stay point and the time point of the last stay point of all the stay points.

Finally, the wireless network signal and building association 205 is performed. A building in which the object stays is determined based on a position of each stay point. That is, the wireless network signal is screened and determined by considering a wireless network signal and building association marking obtained by each positioning-enabled object, to determine a building that is finally in association marking with each wireless network signal. A relation between the building and a wireless local area network, which has a signal strength greater than a strength threshold within the indoor stay time period, is recorded. The recorded relation is for use in indoor positioning. The flow of FIG. 2 is only configured for understanding how to perform binding marking on a wireless network signal and a building, and is not understood as a limitation on a specific implementation of this application.

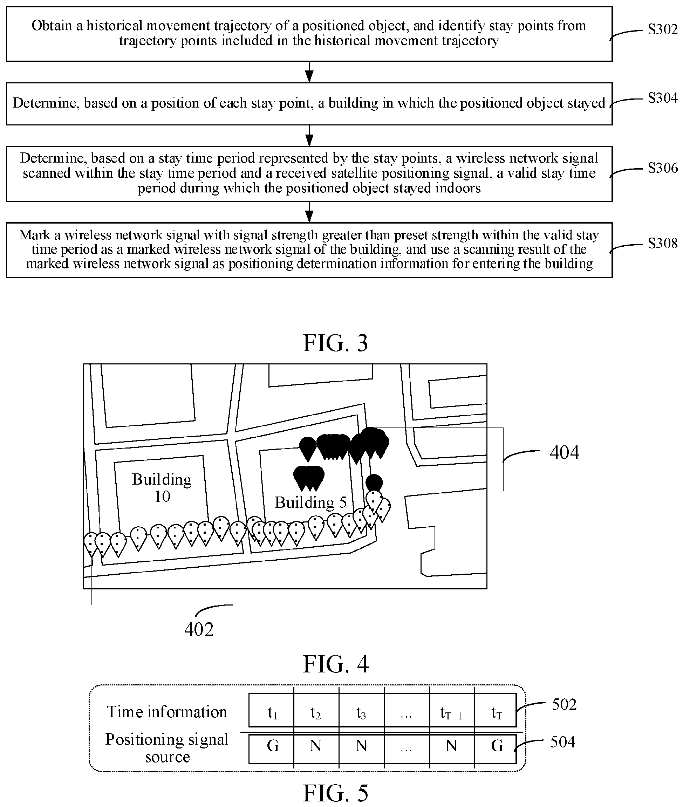

Specifically, the following embodiment is used for description: In one embodiment, as shown in FIG. 3, an in-building positioning processing method is provided. An example in which the method is applied to the server 104 in FIG. 1 is used for description. The method may alternatively be applied to the terminal 102, or may be applied to a system including the terminal 102 and the server 104, and is implemented through interaction between the terminal 102 and the server 104. In this embodiment, the method includes the following operations:
Operation 302: Obtain a movement trajectory of a positioned object, and identify stay points from trajectory points included in the movement trajectory.

The movement trajectory includes a plurality of trajectory points. The movement trajectory is specifically a movement path of the positioned object within a historical period. Therefore, the movement trajectory specifically includes a start trajectory point and an end trajectory point of the positioned object, and all trajectory points through which the positioned object passes within the historical period. The foregoing trajectory points are points subjected to positioning acquisition. Therefore, each trajectory point has corresponding feature information. Next, a stay point is a trajectory point, at which the positioned object does not move, in a movement trajectory, or a trajectory point at which a movement distance is short. For example, an example in which the positioned object is a food delivery rider is used. If the food delivery rider does not move significantly within a period of time, it may be that the food delivery rider stays at a delivery position. In this case, an acquired trajectory point is a stay point. In addition, in certain applications, a stay point may alternatively be a point of interest (POI) of a position at which the positioned object stays.

In addition, as can be known from the foregoing descriptions, the feature information is configured for representing information when positioning acquisition is performed on the trajectory point. The feature information includes at least one of the following: a positioning signal source, position coordinates, time information, a speed, a direction, positioning accuracy, and the like.

Specifically, the server obtains the movement trajectory of the positioned object. As can be known from the foregoing descriptions, in the trajectory acquisition 201, positioning data of each positioning-enabled object may be first acquired. The positioning-enabled object is an object authorized to obtain the positioning data in real time. Then, data cleaning is performed on the positioning data of the positioning-enabled object to obtain an available movement trajectory. Then, the movement trajectory is stored in a database that can be in communicative connection with a server. The database may be configured for subsequent trajectory analysis and positioning. Therefore, when the trajectory analysis needs to be performed, the server may obtain, through the communicative connection to the foregoing database, a movement trajectory obtained after data cleaning.

In some embodiments, the foregoing data cleaning manner may be dividing a to-be-processed movement trajectory based on a distance threshold, to obtain a movement trajectory. The distance threshold is a standard value for performing data cleaning on the movement trajectory. When the to-be-processed movement trajectory is divided based on the distance, if a distance between two consecutive trajectory points is greater than the threshold, the to-be-processed movement trajectory is divided into two movement trajectories based on the two trajectory points. The value may be, for example, 1 kilometer (km) or 2 km according to an actual situation. For example, a distance between two consecutive trajectory points in the to-be-processed movement trajectory is greater than the distance threshold. In this case, the to-be-processed movement trajectory may be divided into two movement trajectories based on the foregoing two trajectory points. As can be known that the distance between the two consecutive trajectory points in the movement trajectory is to be less than the distance threshold.

Specifically, operation I: Set a distance threshold *d_{threshold}.* For example, *d_{threshold}* may be 1 kilometre (km) or 2 km. Operation II: Traverse the consecutive trajectory points in the to-be-processed movement trajectory, and calculate a distance d between two adjacent trajectory points. It can be calculated based on formula $d = 2 R arcsin \left(\sqrt{{sin}^{2} \left(\frac{Δφ}{2}\right) + cos \left({φ}_{1}\right) cos \left({φ}_{2}\right) {sin}^{2} \left(\frac{Δλ}{2}\right)}\right)$ , where R represents the earth radius (which is usually *R* = 6371 × 10³*m*); *φ*₁ and *φ*₂ respectively represent latitudes of a trajectory point and an adjacent trajectory point; *Δφ = φ*₂ *- φ*₁ represents a latitude difference; *λ*₁ and *λ*₂ respectively represent longitudes of the trajectory point and the adjacent trajectory point; and *Δλ* = *λ*₂ - *λ*₁ represents a longitude difference. Operation III: If the distance d between the two adjacent trajectory points is greater than the distance threshold *d_{threshold},* divide the to-be-processed movement trajectory into two movement trajectories based on the two trajectory points. Operation IV: Repeat operation II and operation III, until all the trajectory points in the to-be-processed movement trajectory are traversed, to finally obtain a plurality of movement trajectories, and a distance between two consecutive trajectory points in each movement trajectory is to be less than the distance threshold.

Alternatively, the foregoing data cleaning manner may be dividing the to-be-processed movement trajectory based on a time threshold, to obtain a movement trajectory. A time interval threshold is another standard value for performing data cleaning on the movement trajectory. When a time interval between two consecutive trajectory points in the to-be-processed movement trajectory is greater than the threshold, the to-be-processed movement trajectory is divided into two movement trajectories based on the two trajectory points, and a specific value thereof may be determined based on an actual situation, for example, 1 hour or 2 hours. For example, the time interval between the two consecutive trajectory points of the to-be-processed movement trajectory is greater than the time interval threshold. In this case, the to-be-processed movement trajectory may be divided into two movement trajectories based on the foregoing two trajectory points. As can be known that the time interval between time information corresponding to two consecutive trajectory points in each movement trajectory obtained by division is to be less than the time interval threshold.

Specifically, operation 1: Set a time interval threshold *t_{threshold}.* For example, *t_{threshold}* may be 1 hour, 2 hours, or the like. Operation 2: Traverse the consecutive trajectory points in the to-be-processed movement trajectory, obtain time information *t*₁ and *t*₂ corresponding to two adjacent trajectory points, and calculate a time interval *Δt = t*₂ - *t*₁ therebetween. Operation 3: If the time interval *Δt* between the two adjacent trajectory points is greater than the time interval threshold *t_{threshold},* divide the to-be-processed movement trajectory into two movement trajectories based on the two trajectory points. Operation 4: Repeat operation 2 and operation 3, until all the trajectory points in the to-be-processed movement trajectory are traversed, to finally obtain a plurality of movement trajectories, and the time interval between the time information corresponding to two consecutive trajectory points in each movement trajectory obtained by division is to be less than the time interval threshold.

Further, the server identifies the stay points from the trajectory points included in the movement trajectory. It can be learned from the foregoing description that each trajectory point included in the movement trajectory has its feature information. In this case, by considering the feature information of each trajectory point, whether the positioned object is in a stay state when the positioned object is at the trajectory point may be determined. That is, the stay points are identified from the trajectory points through the feature information of each trajectory point.

Based on this, in one specific embodiment, the identifying stay points from the trajectory points included in the movement trajectory includes: extracting feature information of each point included in the movement trajectory; and identifying the stay points from the points based on the feature information of each point.

The feature information includes at least one of the following: a positioning signal source, position coordinates, time information, a speed, a direction, positioning accuracy, and the like. The positioning signal source is configured for recording source information of the position coordinates of the trajectory point. For example, if the position coordinates of the trajectory point come from a GPS, the positioning signal source of the trajectory point is a satellite positioning signal. Alternatively, the position coordinates of the trajectory point come from Wi-Fi, so that the positioning signal source of the trajectory point is a wireless network signal. The wireless network signal may alternatively be a base station positioning signal, a Bluetooth positioning signal, or the like. This is not limited herein.

The position coordinates specifically include a longitude and a latitude. The time information is a time stamp of acquiring the position coordinates of the trajectory point. In a case that the positioning signal source of the trajectory point is a satellite positioning signal, the speed is a movement speed of the positioned object, and is usually measured in m/s. This can help understand a movement state of the positioning-enabled object, for example, whether the positioning-enabled object is walking, riding, driving, or staying at a place. The direction is a movement direction of the positioned object. Moreover, the positioning accuracy is specifically a positioning accuracy value. The positioning accuracy value is configured for indicating credibility of the position coordinates of the trajectory point. A smaller positioning accuracy value indicates more accurate position coordinates of the trajectory point.

Specifically, in a trajectory acquisition process, the positioning data of the positioned object is acquired. In addition, after trajectory generation and data cleaning are performed based on the positioning data of the positioned object, the movement trajectory including the plurality of consecutive trajectory points can be obtained. In this case, the trajectory points all carry the feature information correspondingly acquired during positioning acquisition. Therefore, stay point screening is performed on the trajectory points based on the feature information of each trajectory point. That is, whether the positioned object stays on a trajectory point is determined based on the feature information of each trajectory point, thereby identifying the stay points from the trajectory points.

Since the feature information includes information of a plurality of dimensions. The following will describe how to identify the stay points from the trajectory points below for the information of different dimensions, and a manner for identifying the stay points may be performed by using at least one of the following embodiments.

In one embodiment, the feature information at least includes a positioning signal source of the trajectory point. The positioning signal source is configured for recording source information of the position coordinates of the trajectory point. For example, if the position coordinates of the trajectory point come from a GPS, the positioning signal source of the trajectory point is a satellite positioning signal. Alternatively, the position coordinates of the trajectory point come from Wi-Fi, so that the positioning signal source of the trajectory point is a wireless network signal. The wireless network signal may alternatively be a base station positioning signal, a Bluetooth positioning signal, or the like. This is not limited herein.

The identifying the stay points from the trajectory points based on the feature information of each trajectory point includes at least one of the following manners: identifying, from the movement trajectory, a point detected using a non-satellite positioning signal as a stay point, i.e., trajectory points with positioning signal sources that do not belong to the satellite positioning signal may be determined as the stay points; and identifying, from the movement trajectory, a point detected using a satellite positioning signal with a positioning accuracy greater than a threshold as a stay point, i.e., trajectory points with positioning signal sources that belong to the satellite positioning signal and positioning accuracy greater than a positioning accuracy threshold may be determined as the stay points.

The positioning accuracy threshold is a minimum positioning accuracy value representing that the position coordinates are inaccurate. When whether a trajectory point is a stay point is determined, if the positioning signal source of the trajectory point belongs to the satellite positioning signal, and the positioning accuracy of the trajectory point is greater than the threshold, the trajectory point may be a stay point at which the positioned object stays, and a value of the positioning accuracy threshold may be flexibly determined according to an actual situation, which is 50 m in this embodiment.

Specifically, since a satellite signal is transmitted to a positioning device and received by the positioning device, the satellite signal needs to pass through an atmospheric layer. An atmospheric ion layer in the atmospheric layer is relatively thick, and air in the atmospheric ion layer is very thin. However, there are a large quantity of ionized electrons. These electrons will reduce the speed of electromagnetic waves, causing a delay. Moreover, the satellite signal is located near the ground surface. Due to impact of various buildings, mountains, and water surfaces, the satellite signal may be reflected or refracted (a multipath effect), causing a delay. Therefore, the satellite positioning signal is prone to positioning drift in an indoor scenario.

Based on this, the server needs to determine whether the positioning signal source in the movement trajectory belongs to the satellite positioning signal, that is, whether the position coordinates of the trajectory point come from the GPS. If the positioning signal source does not belong to the satellite positioning signal, it indicates that the positioning signal source may be the wireless network signal of any one of a Wi-Fi positioning signal, a base station positioning signal, and a Bluetooth positioning signal. The wireless network signal is generally disposed indoors. Therefore, it can be determined that the positioned object may be located in an indoor environment or an environment with a poor GPS positioning signal. In this case, the trajectory points with the positioning signal sources that do not belong to the satellite positioning signal may be places at which the positioned object stays. Therefore, the trajectory points with the positioning signal sources that do not belong to the satellite positioning signal are determined as the stay points.

On the contrary, if the positioning signal source belongs to the satellite positioning signal, it indicates that the positioning signal source is specifically a GPS positioning signal. It can be known from the foregoing descriptions that in a case that the positioning signal source of the trajectory point is the satellite positioning signal, the positioning accuracy in the feature information is specifically a positioning accuracy value. The positioning accuracy value is configured for representing a credibility of the position coordinates of the trajectory point. In addition, a smaller positioning accuracy value indicates more accurate position coordinates of the trajectory point, and a larger positioning accuracy value indicates less accurate position coordinates of the trajectory point. Only when the positioned object is located in the indoor environment or the environment with a poor GPS positioning signal, the positioned object stays indoors. That is, a larger positioning accuracy value indicates that the positioned object may be located in the indoor environment or the environment with a poor GPS positioning signal. Therefore, whether the positioning accuracy is greater than the positioning accuracy threshold needs to be determined. If the positioning accuracy is greater than the positioning accuracy threshold, a trajectory point with the positioning accuracy greater than the positioning accuracy threshold is determined. In this case, it indicates that a GPS positioning signal is poor. That is, the trajectory point may be acquired in a place with an unstable GPS positioning signal. Such a trajectory point may alternatively be a stay point of the positioned object. Therefore, the trajectory point with the positioning accuracy greater than the positioning accuracy threshold is used as the stay point.

In one embodiment, the feature information at least includes position coordinates and time information of the trajectory point. The position coordinates specifically include a longitude and a latitude. The time information is a time stamp of acquiring the position coordinates of the trajectory point.

The identifying the stay points from the trajectory points based on the feature information of each trajectory point includes: determining, for a first point (e.g., for each trajectory point), a movement speed of the positioned object (also referred to as object movement speed) between the first point and an adjacent point using position coordinates and time information of the first point and the position coordinates and time information of the adjacent point; and determining a movement speed smaller than a speed threshold as a stay speed of the positioned object, and identifying the first point as a stay point when the movement speed is smaller than a threshold, i.e., using trajectory points having the stay speed of the positioned object as the stay points.

The adjacent trajectory point may be a former trajectory point adjacent to the trajectory point, or may be a latter trajectory point adjacent to the trajectory point. For example, the movement trajectory includes a trajectory point A1, a trajectory point A2, a trajectory point A3, and so on to a trajectory point A10 that are consecutive in sequence. For the trajectory point A2, adjacent trajectory points include the trajectory point A1 and the trajectory point A3. The trajectory point A1 is a former trajectory point adjacent to the trajectory point A2, and the trajectory point A3 is a latter trajectory point adjacent to the trajectory point A2.

Based on this, the object movement speed is specifically a speed at which the positioned object moves from a former trajectory point to a latter trajectory point. That is, the object movement speed may be a speed at which the object moves from a former trajectory point adjacent to a trajectory point to the trajectory point at the time stamp of the trajectory point. Alternatively, the object movement speed may be a speed at which the object moves from the trajectory point to a latter trajectory point adjacent to the trajectory point at the time stamp of the latter trajectory point. The speed threshold is a minimum value representing that the positioned object stays or a minimum value of the movement speed. After the object movement speed of the positioned object between the trajectory point and the adjacent trajectory point is determined through the position coordinates and time information of the trajectory point, if the object movement speed is less than the threshold, the object movement speed is determined as the stay speed of the positioned object, and the trajectory point matching the stay speed is used as the stay point. A value of the object movement speed may be flexibly determined according to an actual situation, and is 0.001 in this embodiment.

Specifically, the server performs the following processing on each trajectory point in the movement trajectory: extracting the position coordinates and time information in the feature information of the trajectory point, determining the adjacent trajectory point adjacent to the trajectory point, and extracting the position coordinates and time information in the feature information of the adjacent trajectory point, to determine the object movement speed of the positioned object between the trajectory point and the adjacent trajectory point through the position coordinates and time information of the trajectory point, and the position coordinates and time information of the adjacent trajectory point.

In one embodiment, the server specifically calculates a position coordinate difference between the position coordinates of the trajectory point and the position coordinates of the adjacent trajectory point, calculates a time information difference between the time information of the trajectory point and the time information of the adjacent trajectory point, and then divides the position coordinate difference by the time information difference to obtain the object movement speed.

In one embodiment, the server first calculates, based on the longitudes and latitudes of the trajectory point and the adjacent trajectory point, an actual distance d between the two points by using the following formula $d = 2 R arcsin \left(\sqrt{{sin}^{2} \left(\frac{Δφ}{2}\right) + cos \left({φ}_{1}\right) cos \left({φ}_{2}\right) {sin}^{2} \left(\frac{Δλ}{2}\right)}\right)$, where R represents the earth radius (which is usually R = 6371 × 10³*m*); *φ*₁ and *φ*₂ respectively represent latitudes of the trajectory point and an the adjacent trajectory point; *Δφ = φ*₂ *- φ*₁ represents a latitude difference; *λ*₁ and *λ*₂ respectively represent longitudes of the trajectory point and the adjacent trajectory point; and Δ*λ* = *λ*₂ - *λ*₁ represents a longitude difference. Then, the server calculates a time information difference *Δt* between the time information of the trajectory point and the time information of the adjacent trajectory point, and divides the actual distance d by the time information difference *Δt* to obtain an object movement speed $v = \frac{d}{Δt}$.

If the adjacent trajectory point is a former trajectory point adjacent to the trajectory point, the object movement speed is specifically a speed of the positioned object at the time stamp of the trajectory point. If the adjacent trajectory point is a latter trajectory point adjacent to the trajectory point, the object movement speed is specifically a speed of the positioned object at the time stamp of the latter trajectory point.

For ease of understanding, an example in which the adjacent trajectory point is a former trajectory point adjacent to the trajectory point is used for description by using the following formula (1): $V = \frac{{P}_{2} - {P}_{1}}{{T}_{2} - {T}_{1}} ;$ (1)
where *V* represents the object movement speed of the positioned object from the former trajectory point to the trajectory point; *P*₂ represents the position coordinates of the trajectory point; *P*₁ represents the position coordinates of the former trajectory point; *T*₂represents the time information of the trajectory point; and *T*₁ represents the time information of the former trajectory point.

Further, the object movement speed less than the speed threshold is determined as the stay speed of the positioned object. That is, the object movement speed being less than the speed threshold indicates that the positioned object may be in a stay state, or a movement distance is relatively short. Therefore, the server uses the trajectory point matching the stay speed of the positioned object as the stay point, that is, the object movement speed is a speed at the time stamp of the trajectory point. In this case, the trajectory point matching the stay speed of the positioned object is specifically a trajectory point corresponding to the time stamp represented by the object movement speed. That is, the trajectory point corresponding to the time stamp represented by the object movement speed is the stay point.

For ease of understanding, an example in which the speed threshold is 0.001 is used for description. If an object movement speed B1 from the trajectory point A1 to the trajectory point A2 is 0.005, the object movement speed B1 specifically represents a speed of the positioned object at the time stamp of the trajectory point A2. Similarly, if an object movement speed B2 from the trajectory point A2 to the trajectory point A3 is 0.0005, the object movement speed B2 specifically represents a speed of the positioned object at the time stamp of the trajectory point A3. As can be seen, the object movement speed B2 is less than the speed threshold. In this case, the object movement speed B2 may be determined as the stay speed, and the stay speed specifically represents the speed of the positioned object at the time stamp of the trajectory point A3. In this case, a trajectory point matching the stay speed is the trajectory point A3. In this case, the trajectory point A3 is determined as the stay point.

In one embodiment, the identifying the stay points from the trajectory points based on the feature information of each trajectory point includes: determining, for the first point (e.g., for each trajectory point), a movement speed of the positioned object between the first point and an adjacent point using position coordinates and time information of the first point and position coordinates and time information of the adjacent point; and determining a change rate in the speed of the positioned object at the first point using the movement speed and a satellite-based speed of the object at the first point; and identifying the first point as a stay point when the change rate is greater than a change rate threshold.

The satellite measurement speed is a speed of the positioned object measured, during acquisition of trajectory points, by a satellite positioning device. For example, if the trajectory point A1 is acquired at time information T1, and the satellite positioning device measures that a speed of the positioned object at the time information T1 is 2 m/s, the satellite measurement speed of the trajectory point A1 is 2 m/s. Alternatively, if the trajectory point A2 is acquired at time information T2, and the satellite positioning device measures that a speed of the positioned object at the time information T2 is 1m/s, the satellite measurement speed of the trajectory point A2 is 1 m/s. The satellite positioning device may be a satellite positioning module in a positionable terminal used by the positioned object, and receives a satellite signal and obtains the speed of the positioned object through calculation.

The change rate threshold is a critical value for determining whether a trajectory point is a stay point. After the speed change rate of the positioned object at the trajectory point is determine through the object movement speed and the satellite measurement speed, if the speed change rate is greater than the threshold, it usually indicates that the GPS speed of the positioned object at the trajectory point is inaccurate, and the trajectory point may be a stay point in an indoor scenario, which is set to 3 in this embodiment.

Based on this, the speed change rate is an average value of two speeds within unit time. The speed change rate r is calculated by using the formula $r = \frac{\left|{v}_{1}-{v}_{2}\right|}{min \left({v}_{1}, {v}_{2}\right) + ϵ}$, where *v*₁ represents the object movement speed; *v*₂ represents the satellite measurement speed; and *ε* represents a minimal constant, for example, it may be 0.00000000001. Next, the change rate threshold is set to 3. When the speed change rate is 3, it usually indicates that the GPS speed of the positioned object at the trajectory point is inaccurate. The reason why the GPS speed is inaccurate is a poor GPS signal, and the positioned object is usually in an indoor scenario. Therefore, the trajectory point is a stay point of the positioned object. The minimal constant is a constant that approaches to zero and is used in the formula for calculating the speed change rate, and is configured for avoiding a case in which the denominator is zero and ensuring calculation stability and accuracy. A specific value of the minimal constant may be determined according to an actual situation. For example, in this application, the value may be a minimal positive value.

Specifically, by using a manner similar to that described in the foregoing embodiment, the server determines, for each trajectory point, the object movement speed of the positioned object between the trajectory point and the adjacent trajectory point through the position coordinates and time information of the trajectory point and the position coordinates and time information of the adjacent trajectory point. This will not be elaborated herein.

Next, the server determines the speed change rate of the positioned object at the trajectory point through the object movement speed and the satellite measurement speed. That is, the server first calculates an absolute value difference between the object movement speed and the satellite measurement speed, then selects a speed having a smaller speed value from the object movement speed and the satellite measurement speed as a denominator speed, and then sums a value result obtained by dividing the absolute value difference by the denominator speed (the speed that has the smaller speed value and is selected from the object movement speed and the satellite measurement speed) with the minimal constant, to obtain the speed change rate.

For ease of understanding, how to obtain the speed change rate is specifically described by using the following formula (2): $ϑ = \frac{\left|V-{V}_{w}\right|}{Min \left(V, {V}_{w}\right)} + ε ;$ (2)
where ϑ represents the speed change rate; *V*represents the object movement speed of the positioned object from the former trajectory point to the trajectory point; *V_{w}* represents the satellite measurement speed; *Min*(*V, V_{w}*) represents the speed that has the smaller speed value and is selected from the object movement speed and the satellite measurement speed; and *ε* represents the minimal constant.

For example, if the object movement speed of the positioned object from the former trajectory point to the trajectory point is 10 m/s, and the satellite measurement speed at the time information corresponding to the trajectory point is 2 m/s, the absolute value difference between the object movement speed and the satellite measurement speed is 8 (10-2) m/s, and the satellite measurement speed is the speed that has the smaller speed value and is selected from the object movement speed and the satellite measurement speed, that is, the speed is 2 m/s. The obtained speed change rate of the trajectory point is approximately equal to 4 (8/2) by summing the minimal constant.

Further, when the speed change rate reaches the change rate threshold, it usually indicates that the GPS speed of the positioned object at the trajectory point is inaccurate. The reason why the GPS speed is inaccurate is a poor GPS signal, and the positioned object is usually in an indoor scenario. Therefore, the trajectory point is a stay point of the positioned object. Therefore, the server uses the trajectory points at which the speed change rates are greater than the change rate threshold as the stay points. For example, an example in which the change rate threshold is set to 3 is used. It can be learned from the foregoing calculation that the speed change rate of the trajectory point is approximately equal to 4, and the speed change rate is greater than the change rate threshold. Therefore, the trajectory points with the speed change rates of 4 may be determined as the stay points.

In one embodiment, the identifying the stay points from the trajectory points based on the feature information of each trajectory point includes: using a start trajectory point or an end trajectory point in the movement trajectory as a stay point.

The start trajectory point is a trajectory point at which the movement trajectory starts. Similarly, the end trajectory point is a trajectory point at which the movement trajectory ends. For example, the movement trajectory includes a trajectory point A1, a trajectory point A2, a trajectory point A3, and so on to a trajectory point A10 that are consecutive in sequence, so that the trajectory point A1 is the start trajectory point, and the trajectory point A10 is the end trajectory point.

Specifically, since the positioned object may stay at both the start and the end of the movement trajectory, the positioned object starts to move from a position and stops moving at another position, and a trajectory point at which the movement trajectory starts may be used as a stay point, and a trajectory point at which the movement stops may be used as a stay point. Therefore, the start trajectory point in the movement trajectory is used as the stay point, and the end trajectory point in the movement trajectory is used as the stay point. For example, if the trajectory point A1 is the start trajectory point, and the trajectory point A10 is the end trajectory point, both the trajectory point A1 and the trajectory point A10 may be determined as the stay points.

Operation 304: Determine, based on a position of each stay point, a building in which the positioned object stays.

As can be seen from the foregoing descriptions, the feature information is configured for representing information when positioning acquisition is performed on the trajectory points, and the feature information includes the position coordinates of the trajectory points. Therefore, the positions of the stay points identified from the trajectory points are the position coordinates of the trajectory points, and the position coordinates specifically include the longitudes and the latitudes. Specifically, the server positions, based on the position of each stay point, the building in which the positioned object stays. That is, the server determines stay position coordinates based on the position of each stay point, and screens out and determines, based on the stay position coordinates, the building in which the positioned object stays from a plurality of actual buildings.

A manner for determining the building in which the positioned object stays is described in detail below:
In one embodiment, the positioning, based on a position of each stay point, a building in which the positioned object stays includes: averaging position coordinates of a plurality of stay points, and using obtained average position coordinates as stay position coordinates; searching for a first candidate building with a shortest distance to the stay position coordinates, and determining a first distance between building position coordinates of the first candidate building and the stay position coordinates; and determining, in a case that the first distance is less than a first distance threshold, the first candidate building as the building in which the positioned object stays.

The stay position coordinates are configured for representing a stay position of the positioned object, and the stay position coordinates are obtained by averaging the position coordinates of a plurality of stay points. The first distance is a coordinates distance between the building position coordinates of the first candidate building and the stay position coordinates. The first distance threshold is a distance standard for determining whether the first candidate building is the building in which the positioned object stays. After the first distance between the building position coordinates of the first candidate building and the stay position coordinates is calculated, if the first distance is less than the threshold, the first candidate building is determined as the building in which the positioned object stays. A value of the first distance may be determined based on specific requirements. In this embodiment, the first distance is 20 meters, or may be 30 meters, 40 meters, or the like in an embodiment.

Specifically, the server averages the position coordinates of the plurality of stay points, and uses the average position coordinates obtained from the position coordinates of the plurality of stay points as the stay position coordinates. For example, the position coordinates of a stay point C1 are (50, 50); the position coordinates of a stay point C2 are (51, 52); and the position coordinates of a stay point C3 are (49, 54). Then, (50, 52) may be obtained by averaging the position coordinates of the stay point C1, the stay point C2, and the stay point C3. Therefore, it may be determined that the stay position coordinates are (50, 52).

In one embodiment, the server may respectively transform the longitudes and latitudes of the plurality of stay points into three-dimensional Cartesian coordinates (*x, y, z*), and a conversion formula is: *x* = *Rcos*(*φ*)*cos*(*λ*)*, y* = *R*cos(*φ*)sin(*λ*), and *z* = *R*sin(*φ*), where *R* represents the earth radius (which is usually *R* = 6371 × 10³*m*); *φ* represents the latitude; and *λ* represents the longitude. Then, an arithmetic mean value is calculated by using the three-dimensional Cartesian coordinates of the plurality of stay points, to obtain average three-dimensional Cartesian coordinates (*x̅*, *y̅*, *z̅*). Finally, the average three-dimensional Cartesian coordinates are converted back to a longitude and latitude, and a conversion formula is: $φ = arcsin \left(\frac{z}{\sqrt{{x}^{2} + {y}^{2} + {z}^{2}}}\right)$ , *λ* = arctan2(*y*, *x*). The obtained longitude and latitude are used as the stay position coordinates.

Based on this, the server extracts building position coordinates of each of the plurality of actual buildings, then calculates a distance between the building position coordinates and the stay position coordinates, selects an actual building with a shortest distance as the first candidate building, and determines the distance between the building position coordinates and the stay position coordinates as the first distance. In this case, the server determines whether the first distance is less than the first distance threshold. If the first distance is less than the first distance threshold, the server determines the first candidate building whose first distance between the building position coordinates and the stay position coordinates is less than the first distance threshold as the building in which the positioned object stays. On the contrary, if the first distance is greater than the first distance threshold, the first candidate building is culled, that is, binding marking are not performed on the first candidate building and the wireless network signal on the movement trajectory.

Since the positioned object may not enter the building, but is located at a building entrance/exit or a building periphery, during the determination of the building in which the positioned object stays, it can further consider performing screening determination on the building entrance position coordinates. The following will describe this in detail.

In one embodiment, a manner for determining the building in which the positioned object stays further includes:
determining, based on the stay time period, a first stay trajectory point and a second stay trajectory point from the trajectory points included in the movement trajectory; the first stay trajectory point being a former trajectory point of a start stay point within the stay time period, and the second stay trajectory point being a latter trajectory point of an end stay point within the stay time period; averaging the position coordinates of the first stay trajectory point and the position coordinates of the second stay trajectory point, and using obtained average position coordinates as building entrance position coordinates; searching for a second candidate building and a third candidate building that are closest in a distance to the building entrance position coordinates, and determining a second distance between building position coordinates of the second candidate building and the building entrance position coordinates, and a third distance between building position coordinates of the third candidate building and the building entrance position coordinates; the second distance being less than the third distance; and determining, in a case that the second distance is less than a second distance threshold, and a distance ratio of the second distance to the third distance is less than a distance ratio threshold, the second candidate building as the building in which the positioned object stays.

The stay time period is determined based on the time information represented by the stay points. For example, a stay point C1, a stay point C2, and a stay point C3 are provided. The time information at which the stay point C1 is acquired is a time stamp D1. The time information at which the stay point C2 is acquired is a time stamp D2. The time information at which the stay point C3 is acquired is a time stamp D3. The time stamp D1, the time stamp D2, and the time stamp D3 constitute the stay time period.

Based on this, the first stay trajectory point is the former trajectory point of the start stay point within the stay time period, and the second stay trajectory point is the latter trajectory point of the end stay point within the stay time period. The stay time period is determined based on the time information represented by the stay points, and the stay points actually belong to the trajectory points of the movement trajectory. Therefore, a 1st stay point within the stay time period is the start stay point, and a former trajectory point adjacent to the start stay point in the movement trajectory is the first stay trajectory point. Similarly, a last stay point within the stay time period is the end stay point, and a latter trajectory point adjacent to the end stay point in the movement trajectory is the second stay trajectory point.

Next, the building entrance position coordinates are configured for representing an entrance position of the building in which the positioned object stays, and the building entrance position coordinates are obtained by averaging the position coordinates of the first stay trajectory point and the position coordinates of the second stay trajectory point. The second distance is a coordinates distance between the building position coordinates of the second candidate building and the building entrance position coordinates. The third distance is a coordinates distance between the building position coordinates of the third candidate building and the building entrance position coordinates. In addition, the second distance is less than the third distance. That is, the second candidate building is closer to the building entrance position coordinates than the third candidate building. In addition, the distance ratio is specifically a ratio result obtained by dividing the second distance serving as a numerator by the third distance serving as a denominator.

The second distance threshold is a distance standard for determining whether the second candidate building is the building in which the positioned object stays. After the second distance between the building position coordinates of the second candidate building and the building entrance position coordinates is calculated, if the second distance is less than the threshold, other conditions further need to be determined. If other conditions are satisfied, the second candidate building is determined as the building in which the positioned object stays. A value of the second distance may be determined based on specific requirements, and is set to 5 m in this embodiment, or may be 10 m, 15 m, or the like in an embodiment.

The distance ratio threshold is a standard for helping to determine whether the second candidate building is the building in which the positioned object stays. After the distance ratio of the second distance to the third distance is calculated, if the distance ratio is less than the threshold, and the second distance is less than the second distance threshold, the second candidate building is determined as the building in which the positioned object stays. A value of the distance ratio may be determined based on specific requirements, and is set to 0.6 in this embodiment, or may be 0.5, 0.55, or the like in an embodiment.

Specifically, the server determines the stay time period based on the time information represented by the stay points, then identifies the 1st stay point within the stay time period as the start stay point, and identifies the last stay point within the stay time period as the end stay point. Therefore, the former trajectory point adjacent to the start stay point in the movement trajectory is identified as the first stay trajectory point, and the latter trajectory point adjacent to the end stay point in the movement trajectory is identified as the second stay trajectory point.

Further, the server extracts the position coordinates of the first stay trajectory point and the position coordinates of the second stay trajectory point based on the feature information of the first stay trajectory point and the second stay trajectory point, obtains the average position coordinates in the averaging manner described in the foregoing embodiment, and then uses the obtained average position coordinates as the building entrance position coordinates. For ease of understanding, an example in which the movement trajectory includes a trajectory point A1, a trajectory point A2, a trajectory point A3, and so on to a trajectory point A10 that are consecutive in sequence is used. If the trajectory point A3 is identified as a stay point C1, the trajectory point A4 is identified as a stay point C2, and the trajectory point A5 is identified as a stay point C3, the trajectory point A3 is the start stay point within the stay time period, and the trajectory point A5 is the end stay point within the stay time period. Thus, the former trajectory point adjacent to the start stay point (that is, the trajectory point A3) in the movement trajectory is the trajectory point A2. Therefore, it may be determined that the trajectory point A2 is the first stay trajectory point. Similarly, the latter trajectory point adjacent to the end stay point (that is, the trajectory point A5) in the movement trajectory is the trajectory point A6. Therefore, it may be determined that the trajectory point A6 is the second stay trajectory point.

Based on this, the server extracts building position coordinates of each of a plurality of actual buildings, then calculates a distance between the building position coordinates and the building entrance position coordinates, selects an actual building with a shortest distance as the second candidate building, and selects an actual building with a relatively short distance as the third candidate building. That is, the distance between the building position coordinates of each of the plurality of actual buildings and the building entrance position coordinates is sorted, and two actual buildings are selected in an ascending order based on the distances as the second candidate building and the third candidate building. In this case, the distance between the building position coordinates of the second candidate building and the building entrance position coordinates is determined as the second distance, and the distance between the building position coordinates of the third candidate building and the building entrance position coordinates is determined as the third distance. The second candidate building is closest in a distance to the building entrance position coordinates and the third candidate building is relatively closer to the building entrance position coordinates, so that the second distance is less than the third distance.

In this case, the server determines whether the second distance is less than the second distance threshold. If the second distance is less than the second distance threshold, the server needs to further determine whether the distance ratio of the second distance to the third distance is less than the distance ratio threshold. If the distance ratio is less than the distance ratio threshold, the server determines the second candidate building as the building in which the positioned object stays. On the contrary, in a case that the second distance is greater than the second distance threshold, the second candidate building is culled, and no building marking is performed on a wireless network signal within this stay time period. Moreover, if the distance ratio is greater than the distance ratio threshold, the second candidate building is also culled, and no building marking is performed on a wireless network signal within this stay time period.

For ease of understanding, an example in which the second distance threshold is set to 5 m and the distance ratio threshold is set to 0.6 is used. If the second distance is 4 m and the third distance is 10 m, it may be determined that the distance ratio of the second distance to the third distance is 0.4 (4/10). Thus, the second distance (4 m) is less than the second distance threshold (5 m), and the distance ratio (0.4) of the second distance to the third distance is also less than the distance ratio threshold (0.6). Therefore, the second candidate building may be determined as the building in which the positioned object stays.

In one embodiment, a manner for determining the building in which the positioned object stays further includes: determining, in a case that the first candidate building and the second candidate building are the same building, the first candidate building as the building in which the positioned object stays.

It is considered that in some embodiments, regardless of whether the positioned object enters a building or is located at a building entrance or a building periphery, the building, in which the positioned object stays, determined through the building entrance position coordinates, and the building, in which the positioned object stays, determined through the stay position coordinates are to be the same building. If the buildings determined are different buildings, it indicates that a deviation occurs in a positioning result, and in this case, a result indicating that a building positioning deviation occurs is not to be applied to associated binding.

Specifically, by the foregoing embodiment, in a case that it is determined, through the stay position coordinates, that the first candidate building is the building in which the positioned object stays and in a case that it is determined, through the building entrance position coordinates, that the second candidate building is the building in which the positioned object stays, the server needs to further determine whether the first candidate building and the second candidate building are the same building. If the first candidate building and the second candidate building are the same building, since the first candidate building and the second candidate building are the same building, the same building indicated by both the first candidate building and the second candidate building is determined as the building in which the positioned object stays. If the first candidate building and the second candidate building are not the same building, the first candidate building and the second candidate building are culled, that is, no wireless network signal will be used to perform, on the movement trajectory, binding marking on the first candidate building and the second candidate building that are positioned at this time.

Operation 306: Determine, based on a stay time period represented by the stay points, a wireless network signal scanned within the stay time period and a received satellite positioning signal, a valid stay time period during which the positioned object stays indoors.

The wireless network signal may be any one of a Wi-Fi positioning signal, a base station positioning signal, or a Bluetooth positioning signal. Therefore, for the positioned object, the wireless network signal is a positioning signal scanned by a positionable terminal used by the positioned object. The satellite positioning signal is specifically a satellite signal for positioning, such as a GPS positioning signal. Therefore, the satellite positioning signal is a positioning signal received by the positionable terminal used by the positioned object. Next, the feature information at least includes a positioning signal source of the trajectory point, and the positioning signal source is configured for recording source information of the position coordinates of the trajectory point. Therefore, whether each trajectory point scans a wireless network signal or receives a satellite positioning signal can be determined based on the positioning signal source.

Specifically, the server determines the stay time period based on the time information represented by the stay points, and extracts the positioning signal source from the feature information of the stay points within the stay time period. Based on the positioning signal sources of the stay points, the valid stay time period, during which the positioned object stays indoors, represented by the stay points with the positioning signal sources belong to the wireless network signal is screened and determined from the stay time period.

The following first describes a manner for determining the stay time period. In a specific embodiment, the manner for determining the stay time period represented by the stay point includes: performing upper and lower sliding window processing on the time information of the stay points, to obtain time information obtained after the sliding window processing; and constructing the stay time period through the time information obtained after the sliding window processing.

Specifically, the server may directly extract the time information from the feature information of the stay points, and construct the stay time period through the time information of the stay points. For example, a stay point C1, a stay point C2, and a stay point C3 are provided. The time information at which the stay point C1 is acquired is a time stamp D1. The time information at which the stay point C2 is acquired is a time stamp D2. The time information at which the stay point C3 is acquired is a time stamp D3. The time stamp D1, the time stamp D2, and the time stamp D3 constitute the stay time period.

However, since a problem such as identification omission may occur during the identification of the stay points, the server may first construct a first stay time period through the time information of the stay points. Then, upper and lower sliding window processing is performed on the stay points. A specific operation manner is: setting a sliding window with a fixed size. The size of the sliding window may be determined based on an actual situation, for example, the sliding window is configured to include n trajectory points. For each stay point, a sliding window range is extended forward and backward respectively by using the stay point as a center, and a quantity of trajectory points that satisfy a specific condition (for example, their speeds are less than a threshold or positioning signal sources are wireless network signals) within the sliding window is counted. If the quantity of trajectory points that satisfy the condition exceeds a particular ratio (such as m%), trajectory points that are not identified as stay points within the sliding window are screened as remaining stay points. Then, a second stay time period is constructed based on the time information of the remaining stay points. In this case, the second stay time period includes the time information (the time information of the remaining stay points) obtained after the sliding window processing. In this case, the first stay time period and the second stay time period are combined to obtain a desired stay time period.

For ease of understanding, as shown in FIG. 4, a plurality of trajectory points 402 are not stay points, and a plurality of trajectory points 404 are all stay points. In this case, a stay time period is constructed by using the time information of the plurality of trajectory points 404.

That is, considering that if a large quantity of stay points exist before and after a trajectory point, the trajectory point may be located inside an aggregation region of the stay points, so that this trajectory point may be used as a stay point, to completely construct a stay time period. A process of performing upper and lower sliding window processing on the stay points will be described in detail in subsequent embodiments.

Further, the following describes a manner of how to determine, from the stay time period through the positioning signal source, the valid stay time period during which the positioned object stays: In a specific embodiment, the determining, based on a stay time period represented by the stay points, a wireless network signal scanned within the stay time period and a received satellite positioning signal, a valid stay time period during which the positioned object stays indoors includes: determining a positioning signal source of each stay point within the stay time period; the positioning signal source being the wireless network signal scanned or the received satellite positioning signal; using a former stay point at which the positioning signal source is converted from the satellite positioning signal to the wireless network signal as a first stay point, and using a stay point at which the positioning signal source is converted from the wireless network signal to the satellite positioning signal as a second stay point; and using a time interval between a stay moment of the positioned object at the first stay point and a stay moment of the positioned object at the second stay point as the valid stay time period during which the positioned object stays indoors.

The positioning signal source is the wireless network signal scanned or the received satellite positioning signal. Specifically, the positioning signal source is similar to that in the foregoing embodiment, and details are not described herein again. Next, the first stay point is a former stay point of a stay point at which the positioning signal source is converted from the satellite positioning signal to the wireless network signal within the stay time period, that is, the positioning signal source corresponding to the first stay point is the satellite positioning signal, and the positioning signal source corresponding to a latter stay point adjacent to the first stay point is the wireless network signal. Similarly, the second stay point is a stay point at which the positioning signal source is converted from the wireless network signal to the satellite positioning signal within the stay time period, that is, the positioning signal source corresponding to the second stay point is the satellite positioning signal, and the positioning signal source corresponding to a former stay point adjacent to the second stay point is the wireless network signal.

Specifically, the server extracts the positioning signal source of each stay point through the feature information of each stay point within the stay time period, and sorts the stay points based on the positioning information sources belonging to the wireless network signal or the satellite positioning signal. For ease of understanding, as shown in FIG. 5, a stay time period 502 includes time information of each stay point, that is, time information of a stay point *t*₁ to time information *t_{T}* of a stay point constitute the stay time period 502.Positioning signal sources 504 of a plurality of stay points correspond to the time information.

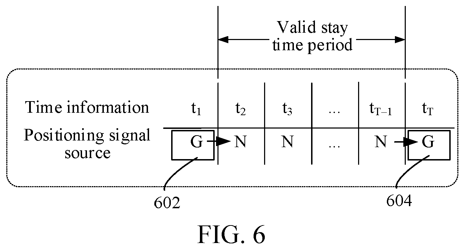

Based on this, the server sequentially determines the positioning signal source of each stay point for the stay time period; after identifying that the positioning signal source is converted from the satellite positioning signal to the wireless network signal, uses a former stay point adjacent to the stay point converted to the wireless network signal as a first stay point; then continues to sequentially determine the positioning signal source of each stay point; and uses, after identifying that the positioning signal source is converted from the wireless network signal to the satellite positioning signal, the stay point converted to the satellite positioning signal as a second stay point. For ease of understanding, an example in FIG. 5 is used for further description. As shown in FIG. 6, a positioning signal source G is indicated as a satellite positioning signal, and a positioning signal source N is indicated as a wireless network signal. Therefore, a stay point at which the positioning signal source G (the satellite positioning signal) is converted to the positioning signal source N (the wireless network signal) is a stay point 602, and a stay point at which the positioning signal source N (the wireless network signal) is converted to the positioning signal source G (the satellite positioning signal) is a stay point 604. Therefore, it may be determined that the stay point 602 is the first stay point, and the stay point 604 is the second stay point.

Further, the server uses a time interval between a stay moment of the positioned object at the first stay point and a stay moment of the positioned object stays at the second stay point as the valid stay time period during which the positioned object stays indoors. That is, the server determines the time information of the first stay point as the stay moment of the positioned object at the first stay point, and determines the time information of the second stay point as the stay moment of the positioned object at the second stay point. Therefore, a time interval between the time information of the first stay point and the time information of the second stay point is used as the valid stay time period during which the positioned object stays indoors. For ease of understanding, referring to FIG. 6 again, the stay point 602 is the first stay point, the stay point 604 is the second stay point. The time information corresponding to the stay point 602 is *t*₁, and the time information corresponding to the stay point 604 is *t_{T}.* Therefore, the time information constituted between the time information *t*₁ and the time information *t_{T}* is the valid stay time period during which the positioned object stays indoors.

In some embodiments, duration during which the positioned object stays indoors is not short. Therefore, whether the time interval between the stay moment of the positioned object at the first stay point and the stay moment of the positioned object at the second stay point reaches an interval threshold may be further determined. The interval threshold may be a value such as 20 seconds or 30 seconds that is determined based on an actual situation. That is, after the first stay point and the second stay point are determined, whether the time interval between the time information of the first stay point and the time information of the second stay point reaches the interval threshold is first determined. If the time interval reaches the interval threshold, the foregoing time interval is then used as the valid stay time period during which the positioned object stays indoors. If the time interval does not reach the interval threshold, it indicates that the positioned object may only move close to the outside of the building, a positioning deviation occurs, or the like. In this case, the valid stay time period during which the positioned object stays indoors is not determined within the stay time period. The interval threshold is a time length standard determined according to an actual situation, and is configured for determining validity of time during which the positioned object stays indoors. When the time interval between the stay moment of the positioned object at the first stay point and the stay moment of the positioned object at the second stay point is determined, if the time interval reaches this threshold, the time interval is used as the valid stay time period during which the positioned object stays indoors, to exclude a misjudgment caused by factors such as a positioning deviation.

Operation 308: Mark a wireless network signal with signal strength greater than preset strength within the valid stay time period as a marked wireless network signal of the building, and use a scanning result of the marked wireless network signal as positioning determination information for entering the building.

The preset strength is obtained by sorting historical signal strength values of the wireless network signal and taking a quantile. Therefore, each wireless network signal has corresponding preset strength. After a set of data is sorted in an ascending or descending order, quantiles are numerical points dividing the data into several equal portions. In this application, the signal strength values of the wireless network signal within a historical movement time period are sorted, and then a signal strength value corresponding to a preset quantile is selected in a descending order as the preset strength of the wireless network signal. The preset quantile is a ratio value for determining the preset strength of the wireless network signal. After the signal strength values of the wireless network signal within each historical movement time period are obtained and sorted, the signal strength value corresponding to the preset quantile is selected in the descending order as the preset strength of the wireless network signal. A specific value of the preset quantile may be adjusted based on an application scenario and data characteristics. It is 30% in this embodiment.

Based on this, the marked wireless network signal includes the wireless network signal with the signal strength greater than the preset strength within the valid stay time period, that is, the marked wireless network signal includes at least one wireless network signal. However, a scanning result of the marked wireless network signal is used as the positioning determination information for entering the building. That is, in some embodiments, if the positioning signal information of the positioned object is a wireless network signal, and in a case that any wireless network signal belonging to the marked wireless network signal is scanned, a building marked by using the marked wireless network signal may be determined as a target building in which the positioned object is located.

Specifically, according to the foregoing embodiment, within the valid stay time period during which the positioned object stays indoors, the positioning signal source of a stay point is inevitably a wireless network signal. Therefore, the server needs to scan and acquire wireless network signals within the valid stay time period, determines the preset strength corresponding to each wireless network signal, and then determines whether the signal strength of a wireless network signal scanned within the valid stay time period is greater than the preset strength of the wireless network signal, marks, if the signal strength is greater than the preset strength, the wireless network signal as a marked wireless network signal of a building, and skips, if the signal strength is not greater than the preset strength, binding between the wireless network signal and the building.

The following describes a manner for determining the preset strength of each wireless network signal. In a specific embodiment, the manner for determining the preset strength includes: obtaining signal strength values of the wireless network signal within each historical movement time period, and sorting the signal strength values; the historical movement time period not including a stay point; and selecting, in a descending order, the signal strength value corresponding to the preset quantile as the preset strength of the wireless network signal.

The historical movement time period does not include a stay point. That is, in each movement trajectory, the stay time period represented by the stay points is removed, and a remaining time period is the historical movement time period. Next, the signal strength values are sorted in the descending order, and the preset quantile is 30%. The specific value of the preset quantile may be adjusted based on a use scenario and data characteristics. Generally, a quantile value that can optimize positioning accuracy may be selected via multiple experiments and data analysis. For example, in this embodiment, the preset quantile is 30%.

Specifically, the server first selects, from each movement trajectory through the stay time period represented by the stay points, the time information of remaining trajectory points not including the time information corresponding to the stay points, and determines the time information of the remaining trajectory points as the historical movement time period; and then, for the feature information of the trajectory points included in each historical movement time period, determines a trajectory point including a wireless network signal, and determines the signal strength values of the trajectory point including the wireless network signal for the wireless network signal. For example, for a wireless network signal R, M trajectory points including the wireless network signal R exist within the historical movement time period. In this case, M signal strength values corresponding to the wireless network signal R may be obtained, for example, [*R*₁, *R*₂, ..., *R_{M}*]*.*

Based on this, the server sorts the signal strength values, then selects, based on a sorting result in the descending order, the signal strength value corresponding to the preset quantile as the preset strength of the wireless network signal, that is, performs screening on the signal strength values in the descending order, and uses a signal strength value at a position of the preset quantile among the signal strength values as the preset strength of the wireless network signal. Specifically, a product of the preset quantile and a total quantity of signal strength values may be obtained, and a value indicated by an obtained product result is the position of the preset quantile in the descending order. In a case that the product result is a non-integer, rounding up or rounding down may be performed. This is not limited herein.

For example, the wireless network signal R is used as an example again. If 10 trajectory points, such as [*R*₁,*R*₂, ..., *R*₁₀], including the wireless network signal R within the historical movement time period, 10 signal strength values are sorted in the descending order. If an obtained sorting result is [*R*₁*, R*₃*, R*₄*, R*₁₀, *R*₉, *R*₇, *R*₈, *R*₂, *R*₆, *R*₅], and the preset quantile is 30%, for the signal strength values of the 10 trajectory points, a 3rd signal strength value in the descending order is used as the preset strength of the wireless network signal. According to the foregoing sorting result, the signal strength value *R*₄ is used as the preset strength of the wireless network signal R.

The corresponding examples in the embodiments of this application are all for understanding this solution, but is not intended to be understood as a specific limitation on this solution.

In the foregoing in-building positioning processing method, since an object inevitably stays on a trajectory inside a building compared with staying outside a building, reliability of a positioned building can be ensured by using the stay points. Next, by performing the association marking between the building in which the positioned object stays and the marked wireless network signal in the building, the scanning result of the marked wireless network signal can be used as the positioning determination information for entering the building. Since the marked wireless network signal is marked and confirmed based on signal strength, a signal problem caused by a change of a signal field of the wireless network signal can be avoided, thereby ensuring reliability of marking between the building and the wireless network signal, so that in-building positioning processing can be directly performed based on a reliable scanning result of the wireless network signal, and in-building positioning processing accuracy is enhanced.

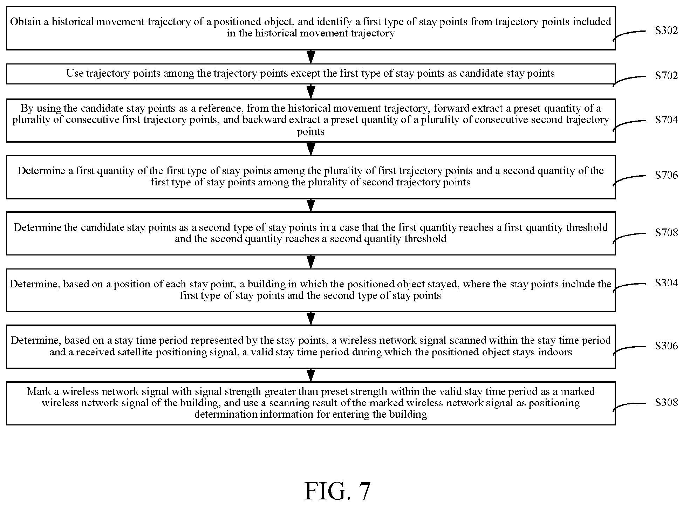

In one embodiment, as shown in FIG. 7, the stay points include category-1 stay points and category-2 stay points; the category-1 stay points includes stay points with the feature information satisfying a condition (referred to as stay point determination condition).

The category-1 stay points includes the stay points with the feature information satisfying the manner for determining the stay points in the foregoing embodiment. That is, the manner of how to identify the stay points from the trajectory points included in a movement trajectory in the foregoing embodiment is specifically configured for identifying the category-1 stay points from the trajectory points based on the feature information of each trajectory point.

The following describes a manner for determining the category-2 stay points. Based on this, the manner for determining the category-2 stay points includes:
Operation 702: Use trajectory points among the trajectory points except the category-1 stay points as candidate stay points.

In this operation, a point other than the category-1 stay point among the points in the movement trajectory is determined as a candidate stay point. The candidate stay points are trajectory points of the movement trajectory except the category-1 stay point. Specifically, the server removes, after identifying the category-1 stay points from the trajectory points based on the feature information of each trajectory point, the category-1 stay points from the trajectory points included in the movement trajectory, and determines remaining trajectory points as the candidate stay points. For example, an example in which the movement trajectory includes a trajectory point A1, a trajectory point A2, a trajectory point A3, and so on to a trajectory point A10 that are consecutive in sequence is used. If the trajectory point A3 is identified as a stay point C 1, the trajectory point A4 is identified as a stay point C2, the trajectory point A5 is identified as a stay point C3, and the trajectory point A3, the trajectory point A4, and the trajectory point A5 are all the category-1 stay points identified through the feature information. Based on this, remaining trajectory point A1, trajectory point A2, trajectory point A6, trajectory point A7, trajectory point A8, trajectory point A9, and trajectory point A10, which are not identified as the category-1 stay point, in the movement trajectory are all determined as the candidate stay points.

Operation 704: By using the candidate stay points as a reference, from the movement trajectory, forward extract a preset quantity of a plurality of consecutive first trajectory points, and backward extract a preset quantity of a plurality of consecutive second trajectory points.

In this operation, starting from the candidate stay point, a first preset quantity of consecutive points preceding the candidate stay point (i.e., the first trajectory points) and a second preset quantity of consecutive points succeeding the candidate stay point in the movement trajectory (i.e., the second trajectory points) are extracted. A quantity of the plurality of first trajectory points is the preset quantity, and the plurality of first trajectory points do not include a candidate stay point. Similarly, a quantity of the plurality of second trajectory points is the preset quantity, and the plurality of second trajectory points do not include a candidate stay point. Next, the preset quantity is set to 20, that is, a quantity of the plurality of first trajectory points and a quantity of the plurality of second trajectory points are both 20.

Specifically, for each candidate stay point, by using the candidate stay point as a reference, from the movement trajectory, the server forward extracts the preset quantity of the plurality of consecutive first trajectory points and backward extracts the preset quantity of the plurality of consecutive second trajectory points. The plurality of first trajectory points may construct a front trajectory point set N_before, and the plurality of second trajectory points may construct a rear trajectory point set N_after.

For ease of understanding, an example in which the movement trajectory includes a trajectory point A1, a trajectory point A2, to a trajectory point A100 that are consecutive in sequence is used. If the trajectory point A20 to the trajectory point A38, the trajectory point A40 to the trajectory point A50 are all identified as the category-1 stay point, the trajectory point A1 to the trajectory point A19, the trajectory point A39, and the trajectory point A51 to the trajectory point A100 are all the candidate stay points. An example in which the trajectory point A39 is used as a reference and the preset quantity is set to 20 is used. 20 consecutive trajectory points forward extracted by starting from the trajectory point A39 are the trajectory point A19 to the trajectory point A38, that is, the plurality of first trajectory points are from the trajectory point A19 to the trajectory point A38. Similarly, 20 consecutive trajectory points backward extracted by starting from the trajectory point A39 are the trajectory point A40 to the trajectory point A59, that is, the plurality of second trajectory points are from the trajectory point A40 to the trajectory point A59.

Operation 706: Determine a first quantity of the category-1 stay points among the plurality of first trajectory points and a second quantity of the category-1 stay points among the plurality of second trajectory points.

In this operation, the candidate stay point is identified as a category-2 stay point when the first quantity reaches a first threshold and the second quantity reaches a second threshold. The first quantity is a total quantity of the category-1 stay points among the plurality of first trajectory points, and the second quantity is a total quantity of the category-1 stay points among the plurality of second trajectory points. Specifically, since the server identifies the category-1 stay points from the trajectory points based on the feature information of each trajectory point, for the plurality of first trajectory points and the plurality of second trajectory points that are extracted for each candidate stay point, the quantity of category-1 stay points included may be counted; the total quantity of the category-1 stay points among the plurality of first trajectory points is determined as the first quantity; and the total quantity of the category-1 stay points among the plurality of second trajectory points is determined as the second quantity.

For ease of understanding, an example in the foregoing embodiment, in which the trajectory point A39 is used as a reference, the plurality of first trajectory points obtained are the trajectory point A19 to the trajectory point A38, and the plurality of second trajectory points obtained are the trajectory point A40 to the trajectory point A59, is used again. Since the trajectory point A20 to the trajectory point A38, and the trajectory point A40 to the trajectory point A50 are all identified as the category-1 stay points, the category-1 stay points among the trajectory point A19 to the trajectory point A38 (the plurality of first trajectory points) includes the trajectory point A20 to the trajectory point A38, that is, the plurality of first trajectory points include 19 category-1 stay points. Therefore, the first quantity is 19. Similarly, the category-1 stay points among the trajectory point A40 to the trajectory point A59 (the plurality of second trajectory points) include the trajectory point A40 to the trajectory point A50. That is, the plurality of second trajectory points include 11 category-1 stay points. Therefore, the second quantity is 11.

Operation 708: Determine the candidate stay points as the category-2 stay points in a case that the first quantity reaches a first quantity threshold and the second quantity reaches a second quantity threshold.

The first quantity threshold is obtained by multiplying the preset quantity by a ratio. For example, if the preset quantity is 20, the first quantity threshold may be 6. Similarly, the first quantity threshold is obtained by multiplying the preset quantity by a ratio. For example, if the preset quantity is 20, the second quantity threshold may be 6. The first quantity threshold and the second quantity threshold may be the same or different. This is not limited herein.

Specifically, for each candidate stay point, if the first quantity reaches the first quantity threshold, and the second quantity reaches the second quantity threshold, the candidate stay point is determined as the category-2 stay points. Accordingly, after the foregoing determination on all the candidate stay points is completed, stay points including the category-1 stay points and the category-2 stay points may be obtained. That is, considering that a large quantity of category-1 stay points exist before and after the candidate stay point, the candidate stay point may be located inside an aggregation region of the category-1 stay points. Therefore, this candidate stay point can alternatively be used as a stay point to facilitate complete construction of the stay time period, to complete upper and lower sliding window processing on the stay points.

For ease of understanding, the example in the foregoing embodiment will be further described again. If the first quantity threshold is 6 and the second quantity threshold is 6, for the trajectory point A39, the first quantity is 19 and the second quantity is 11. That is, the first quantity of the trajectory point A39 reaches the first quantity threshold, and the second quantity of the trajectory point A39 reaches the second quantity threshold. In this case, the trajectory point A39 may be determined as the category-2 stay points.

The corresponding examples in the embodiments of this application are all for understanding this solution, but is not intended to be understood as a specific limitation on this solution.

In the foregoing embodiment, considering that there are a large quantity of category-1 stay points before and after a candidate stay point, the candidate stay point may be located in an aggregation region of the category-1 stay points. Therefore, this candidate stay point can alternatively be used as the category-2 stay points, to complete sliding window processing on the stay points, remove noise during identification of the stay points, and avoid identification omission of an actual stay point during identification. Thus, a constructed stay time period is complete and accurate, to enhance reliability of association marking between a wireless network signal and a building, and then enhance in-building positioning processing accuracy.

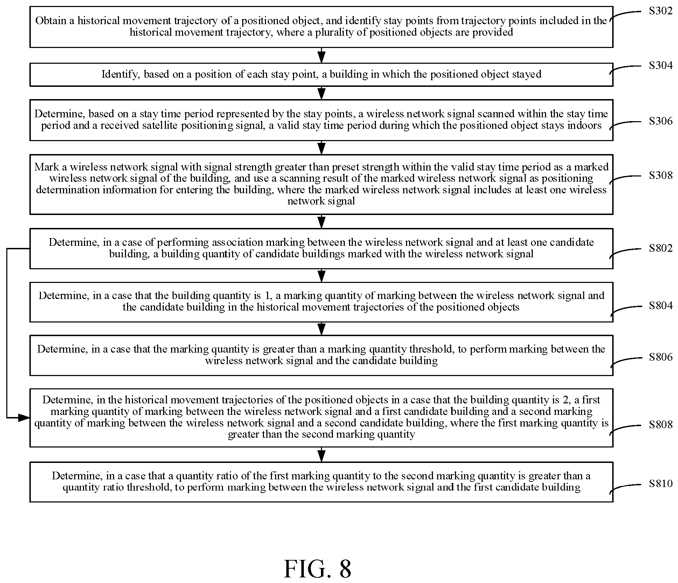

In one embodiment, as shown in FIG. 8, a plurality of positioned objects are provided. The marked wireless network signal includes at least one wireless network signal. That is, the movement trajectories are movement paths of the plurality of positioned objects respectively within a historical period. In addition, each movement trajectory may include at least one wireless network signal which has a marking association with a building in which each positioned object stays.

Among a plurality of movement trajectories, in a case that the same wireless network signal is in association marking with a plurality of different buildings, a building that is in accurate association marking with the wireless network signal needs to be determined. This will be described below. Based on this, the in-building positioning processing method further includes:

Operation 802: Determine, in a case of performing association marking between the wireless network signal and at least one candidate building, a building quantity of candidate buildings marked with the wireless network signal.

Specifically, in the foregoing manner, the server marks the wireless network signal with the signal strength is greater than the preset strength within the valid stay time period as the marked wireless network signal of the building. For the movement trajectories of the plurality of positioned objects, screening determination needs to be performed on a wireless network signal included in each marked wireless network signal. That is, for the wireless network signal subjected to association marking with the at least one candidate building, the building quantity of candidate buildings marked with the wireless network signal is determined.

For example, a movement trajectory E1, a movement trajectory E2, and a movement trajectory E3 are provided. In the movement trajectory E1, by using the manner provided in the foregoing embodiment, it is determined to perform association marking between a wireless network signal R1 and a building F1 and perform association marking between a wireless network signal R2 and the building F1. In the movement trajectory E2, by using the manner provided in the foregoing embodiment, it is determined to perform association marking between the wireless network signal R2 and a building F2 and perform association marking between a wireless network signal R3 and a building F3. In the movement trajectory E3, by using the manner provided in the foregoing embodiment, it is determined to perform associated marking between the wireless network signal R3 and the building F3.

Based on this, for the wireless network signal R1, it can be obtained that association marking is performed between the wireless network signal R1 and the building F1. Therefore, the building quantity of candidate buildings marked with the wireless network signal R1 is 1 (the building F1). Similarly, for the wireless network signal R2, it can be obtained that association marking is performed between the wireless network signal R2 and the building F1, and association marking is performed between the wireless network signal R2 and the building F2. Therefore, the building quantity of candidate buildings marked with the wireless network signal R2 is 2 (the building F1 and the building F2). Similarly, association marking is performed between the wireless network signal R3 and the building F3. Therefore, the building quantity of candidate buildings marked with the wireless network signal R3 is 1 (the building F3).

Whether the building quantity of candidate buildings marked with the wireless network signal is greater than the building quantity threshold needs to be determined below. The foregoing building quantity threshold is 2. If the building quantity is greater than the building quantity threshold, it indicates that the building quantity of candidate buildings marked with the wireless network signal is greater than 2, and it indicates that excessive candidate buildings are marked with the same wireless network signal and a problem may occur in the association marking process. In this case, association marking is not performed between the wireless network signal and any candidate building, that is, the association marking between the wireless network information and the candidate building is removed.

In a case that the building quantity of candidate buildings marked with the wireless network signal is 1, operation 804 is performed. In a case that the building quantity of candidate buildings marked with the wireless network signal is 2, operation 808 is performed.

Operation 804: Determine, in a case that the building quantity is 1, a marking quantity of marking between the wireless network signal and the candidate building in the movement trajectories of the positioned objects.

The marking quantity is a quantity of movement trajectories in which marking is performed between the wireless network signal and the candidate building. Specifically, in a case that the building quantity is 1, if building marking is performed on the wireless network signal in the movement trajectories of the positioned objects, marking is performed between the wireless network signal and the candidate building. Therefore, among the movement trajectories of the positioned objects, how many movement trajectories in which the marking is performed between the wireless network signal and the candidate building can be counted, and the quantity of movement trajectories in which marking is performed between the wireless network signal and the candidate building is determined as the marking quantity.

For ease of understanding, the foregoing example is used for further description. The wireless network signal R3 is used as an example. The building quantity of candidate buildings marked with the wireless network signal R3 is 1, and it can be determined to perform association marking between the wireless network signal R3 and the building F3 in both the movement trajectory E2 and the movement trajectory E3. That is, for the association marking between the wireless network signal R3 and the building F3, marking is performed on the movement trajectory E2 and the movement trajectory E3. Therefore, it can be determined that the quantity of movement trajectories in which marking is performed between the wireless network signal R3 and the building F3 is 2 (that is, the movement trajectory E2 and the movement trajectory E3), and thus, it can be determined that the marking quantity is 2.

Operation 806: Determine, in a case that the marking quantity is greater than a marking quantity threshold, to perform marking between the wireless network signal and the candidate building.

The marking quantity threshold is a minimum quantity of movement trajectories in which marking is performed between the wireless network signal and the candidate building. When the quantity of movement trajectories in which marking is performed between the wireless network signal and the candidate building is greater than the threshold (e.g., 5), it indicates that a confidence level of performing marking between the wireless network signal and the candidate building is high, and it may be determined to perform marking between the wireless network signal and the candidate building. In this embodiment, the quantity of movement trajectories is set to 5.

Specifically, in a case that the quantity of movement trajectories in which marking is performed between the wireless network signal and the candidate building is greater than the marking quantity threshold, there are movement trajectories whose quantity is greater than the marking quantity threshold, in which marking is performed between the wireless network signal and the candidate building. In this case, it may be indicated that the confidence level of performing marking between the wireless network signal and the candidate building is high. Therefore, marking can be performed between the wireless network signal and the candidate building.

The following describes a case in which the building quantity is 2. In one embodiment, the in-building positioning processing method further includes:
Operation 808: Determine, in the movement trajectories of the positioned objects in a case that the building quantity is 2, a first marking quantity of marking between the wireless network signal and a first candidate building and a second marking quantity of marking between the wireless network signal and a second candidate building. The first marking quantity is greater than the second marking quantity.

The first marking quantity refers to a quantity of movement trajectories among the movement trajectories of the positioned objects, in which marking is performed between the wireless network signal and the first candidate building. In a case that the building quantity is 2, the building quantity is compared with the second marking quantity, to determine whether to perform marking between the wireless network signal and the first candidate building. The second marking quantity refers to a quantity of movement trajectories among the movement trajectories of the positioned objects, in which marking is performed between the wireless network signal and the second candidate building. In a case that the building quantity is 2, the building quantity is compared with the first marking quantity. When the first marking quantity is greater than the second marking quantity, and a quantity ratio of the first marking quantity to the second marking quantity is greater than a quantity ratio threshold, it is determined to perform marking between the wireless network signal and the first candidate building. The first marking quantity is greater than the second marking quantity. That is, marking is performed between the first candidate building and the wireless network signal in more movement trajectories.

Specifically, in a case that the building quantity is 2, that is, if building marking is performed on the wireless network signal in the movement trajectories of the positioned objects, marking is performed between the wireless network signal and the first candidate building, and marking is performed between the wireless network signal and the second candidate building. Therefore, among the movement trajectories of the positioned objects, there are a plurality of movement trajectories in which the marking is performed between the wireless network signal and the first candidate building, and the quantity of movement trajectories in which marking is performed between the wireless network signal and the first candidate building is determined as the first marking quantity. Similarly, among the movement trajectories of the positioned objects, there are a plurality of movement trajectories in which the marking is performed between the wireless network signal and the second candidate building, and the quantity of movement trajectories in which marking is performed between the wireless network signal and the second candidate building is determined as the second marking quantity.

For ease of understanding, if the marking quantity G1 between the wireless network signal R3 and the building F3 is 2, and the marking quantity G2 between the wireless network signal R3 and the building F4 is 12, it indicates that there are 12 movement trajectories in which marking is performed between the wireless network signal R3 and the building F4, and there are two movement trajectories in which marking is performed between the wireless network signal R3 and the building F3. In this case, it may be determined that the building F4 is the first candidate building, and the building F3 is the second candidate building. The marking quantity G1 is specifically the second marking quantity, and the marking quantity G2 is specifically the first marking quantity.

Operation 810: Determine, in a case that a quantity ratio of the first marking quantity to the second marking quantity is greater than a quantity ratio threshold, to perform marking between the wireless network signal and the first candidate building.

The quantity ratio threshold is a preset critical value for determining a marking relationship between the wireless network signal and the candidate building. When the first marking quantity of marking between the wireless network signal and the first candidate building is compared with the second marking quantity of marking between the wireless network signal and the second candidate building, and a ratio of the first marking quantity to the second marking quantity is greater than the threshold, it is determined to perform marking between the wireless network signal and the first candidate building. This is a standard for measuring a marking confidence level. The quantity ratio threshold may be set to 5. Specifically, the server calculates the quantity ratio of the first marking quantity to the second marking quantity. That is, the first marking quantity is used as a numerator, and the second marking quantity is used as a denominator, thereby obtaining the quantity ratio of the first marking quantity to the second marking quantity. Based on this, the server determines whether the quantity ratio is greater than the quantity ratio threshold. If the quantity ratio is greater than the quantity ratio threshold, marking is performed between the wireless network signal and the first candidate building matching the first marking quantity. If the quantity ratio is not greater than the quantity ratio threshold, in this case, no association marking is performed between the wireless network signal and the first candidate building, as well as the second candidate building, that is, the association marking between the wireless network information and the first candidate building, as well as the second candidate building, is removed.

For ease of understanding, the example in the foregoing embodiment in which the marking quantity G1 is specifically the second marking quantity and the marking quantity G2 is specifically the first marking quantity is used. Since the second marking quantity is 2 and the first marking quantity is 12, the quantity ratio of the first marking quantity to the second marking quantity is 6 (12/2). Therefore, it can be learned that the quantity ratio (6) is greater than the quantity ratio threshold (5), and the marking quantity between the wireless network signal R3 and the building F4 is G2, so that it is determined to perform marking between the wireless network signal R3 and the building F4.

The corresponding examples in the embodiments of this application are all for understanding this solution, but is not intended to be understood as a specific limitation on this solution.

In the foregoing embodiment, in a case that association marking is performed between the same wireless network signal and a plurality of different buildings in a plurality of movement trajectories, the building quantity of candidate buildings marked with the wireless network signal and the marking quantity of marking between the wireless network signal and the candidate building in the movement trajectories are determined and screened, to determine a building that is in accurate association marking with the wireless network signal, thereby further enhancing reliability of association marking between a wireless network signal and a building, and enhancing in-building positioning processing accuracy.

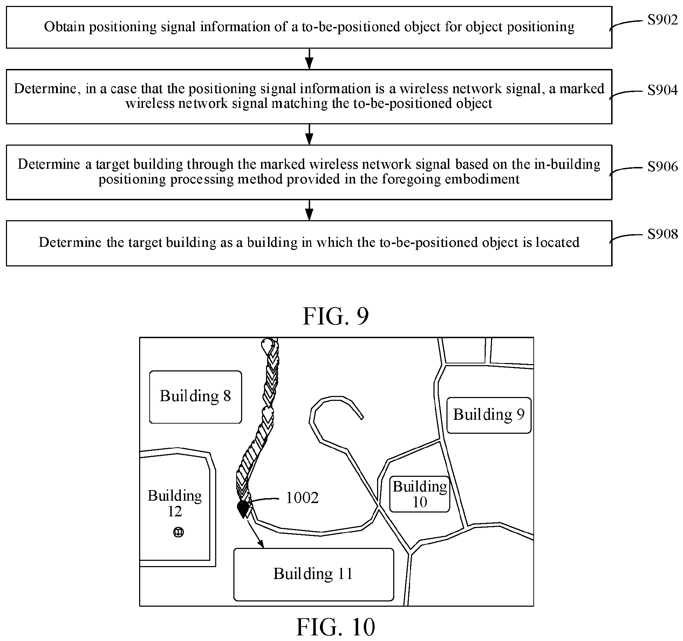

The foregoing embodiment describes a method for performing association marking between a wireless network signal and a building. The following describes, in some embodiments, a building positioning method for a to-be-positioned object based on the in-building positioning processing method provided in the foregoing embodiment. In one embodiment, as shown in FIG. 9, an in-building positioning processing method is provided. An example in which the method is applied to the terminal 102 in FIG. 1 is used for description. The method may alternatively be applied to the server 104 or a system including the terminal 102 and the server 104, and is implemented by interaction between the terminal 102 and the server 104. In this embodiment, the method includes the following operations:
Operation 902: Obtain positioning signal information of a to-be-positioned object for object positioning.

The positioning signal information includes a wireless network signal and a satellite positioning signal. Specifically, the terminal used by the to-be-positioned object obtains the positioning signal information of the to-be-positioned object for object positioning. That is, the terminal may obtain the wireless network signal for object positioning by scanning, or receive the satellite positioning signal for object positioning, and perform object positioning in the existing positioning manner in a case that the positioning signal information is the satellite positioning signal. Details are not described herein again.

Operation 904: Determine, in a case that the positioning signal information is a wireless network signal, a marked wireless network signal matching the to-be-positioned object.

Specifically, in a case that the positioning signal information is the wireless network signal, the to-be-positioned object may be located inside a building or close to the building. In this case, the terminal used by the to-be-positioned object determines the marked wireless network signal matching the to-be-positioned object. The matching marked wireless network signal may be a marked wireless network signal with highest signal strength among at least one marked wireless network signal scanned by the terminal used by the to-be-positioned object, or a marked wireless network signal with signal strength greater than a preset threshold. If image description of the to-be-positioned object is considered, an image description rule library may be pre-established based on a type (such as a person or a vehicle) and a use habit (such as a commonly used Wi-Fi network) of the to-be-positioned object. When related information (such as a network name and frequency band) of the marked wireless network signal scanned matches a rule in the rule library, it is considered that the marked wireless network signal satisfies the image description of the to-be-positioned object.

The image description rule library is a rule set constructed based on the type (such as a person or a vehicle) and the use habit (such as a commonly used Wi-Fi network) of the to-be-positioned object. Usage habit data of different types of to-be-positioned objects, such as names and frequency band ranges of the commonly used Wi-Fi network, and a particular in-vehicle Wi-Fi to which a vehicle may be connected, is acquired, and is classified and collated into a rule entry stored in the library. In some embodiments, the data is used for determining whether related information (such as a network name and a frequency band) of the marked wireless network signal scanned matches a feature of the to-be-positioned object.

In some embodiments, (1) the terminal obtains at least one marked wireless network signal by scanning, and records the signal strength of each marked wireless network signal. (2) If a marked wireless network signal with highest signal strength is selected as a matching signal, the signal strengths of the marked wireless network signals are directly compared to select the marked wireless network signal with the highest signal strength as the marked wireless network signal matching the to-be-positioned object. (3) If a marked wireless network signal with signal strength greater than the preset threshold is selected as the matching signal, the signal strengths of the marked wireless network signals are compared with the preset threshold to screen out the marked wireless network signal with the signal strength greater than the preset threshold. If only one screening result is obtained, the marked wireless network signal is the marked wireless network signal matching the to-be-positioned object. If a plurality of screening results are obtained, selection may be further performed based on another rule (such as signal strength sorting). (4) If image description of the to-be-positioned object is considered, an image description rule library may be pre-established based on a type (such as a person or a vehicle) and a use habit (such as a commonly used Wi-Fi network) of the to-be-positioned object. A specific establishment manner is acquiring usage habit data of different types of to-be-positioned objects, such as names and frequency band ranges of Wi-Fi networks commonly used by a person, and a particular in-vehicle Wi-Fi to which a vehicle may be connected, and classifying and collating the data to form a rule entry stored in the rule library. When related information (such as a network name and a frequency band) of the marked wireless network signal scanned matches a rule in the rule library, matching may be performed on the network name by using a character string matching algorithm (such as a KMP algorithm), and whether the frequency band falls within a frequency band range set in the rule library is determined. If a matching condition is satisfied, it is considered that the marked wireless network signal satisfies the image description of the to-be-positioned object. The character string matching algorithm is an algorithm for searching a text string for a position at which a character string of a specific pattern appears. In this application, for example, the KMP algorithm is configured for determining whether the network name of the marked wireless network signal scanned matches a rule in the image description rule library, which can efficiently search text for a pattern string, thereby enhancing matching accuracy and efficiency.

Operation 906: Determine a target building through the marked wireless network signal based on the in-building positioning processing method provided in the foregoing embodiment.

Specifically, it can be learned from the in-building positioning processing method provided in the foregoing embodiment that building binding marking may be performed on each wireless network signal. Therefore, the terminal used by the to-be-positioned object obtains, by using the in-building positioning processing method provided in the foregoing embodiment, a building subjected to binding marking with the marked wireless network signal, to determine the target building. For example, by using the example in the foregoing embodiment, marking is performed between the wireless network signal R3 and the building F4, and if the marked wireless network signal matching the to-be-positioned object is the wireless network signal R3, the building F4 marked with the wireless network signal R3 is the target building.

Operation 908: Determine the target building as a building in which the to-be-positioned object is located.

Specifically, the terminal used by the to-be-positioned object determines the target building as the building in which the to-be-positioned object is located, that is, determines the target building having a binding marking relationship with the marked wireless network signal as the building in which the to-be-positioned object is located. For example, as can be known from the foregoing example, the building F4 marked with the wireless network signal R3 is the target building. In this case, it may be determined that the building in which the to-be-positioned object is located is the building F4.

For ease of understanding, as shown in FIG. 10, if a matching marked wireless network signal can be scanned from a position 1002 in which the to-be-positioned object is located, and the marked wireless network signal has a binding marking relationship with a building 11, the building 11 may be determined as the building with the position 1002 of the to-be-positioned object

The corresponding examples in the embodiments of this application are all for understanding this solution, but is not intended to be understood as a specific limitation on this solution.

In the foregoing in-building positioning processing method, since the marked wireless network signal is marked and confirmed based on signal strength, a signal problem caused by a change of a signal field of the wireless network signal can be avoided, thereby ensuring reliability of marking between the building and the wireless network signal, so that positioning can be directly performed based on a reliable scanning result of the wireless network signal, and in-building positioning processing accuracy can be enhanced.

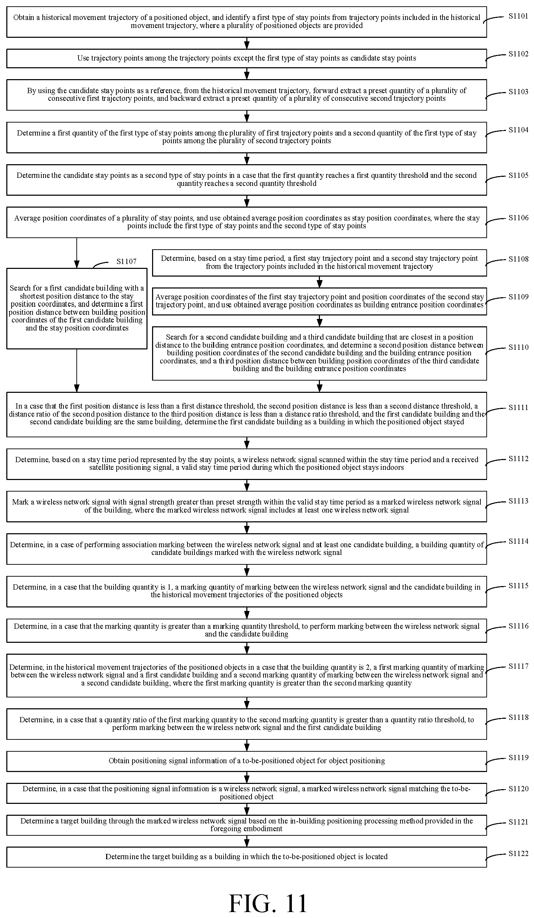

Based on the detailed descriptions of the foregoing embodiments, the following describes a complete flow of the in-building positioning processing method in the embodiments of this application. In one embodiment, as shown in FIG. 11, an in-building positioning processing method is provided. An example in which the method is applied to the server 104 in FIG. 1 is used for description. The method may alternatively be applied to the terminal 102, or a system including the terminal 102 and the server 104, and is implemented through interaction between the terminal 102 and the server 104. In this embodiment, the method includes the following operations:
Operation 1101: Obtain a movement trajectory of a positioned object, and identify a category-1 stay points from trajectory points included in the movement trajectory. A plurality of positioned objects are provided.
Operation 1102: Use trajectory points among the trajectory points except the category-1 stay points as candidate stay points.
Operation 1103: By using the candidate stay points as a reference, from the movement trajectory, forward extract a preset quantity of a plurality of consecutive first trajectory points, and backward extract a preset quantity of a plurality of consecutive second trajectory points.
Operation 1104: Determine a first quantity of the category-1 stay points among the plurality of first trajectory points and a second quantity of the category-1 stay points among the plurality of second trajectory points.
Operation 1105: Determine the candidate stay points as the category-2 stay points in a case that the first quantity reaches a first quantity threshold and the second quantity reaches a second quantity threshold.
Operation 1106: Average position coordinates of a plurality of stay points, and use obtained average position coordinates as stay position coordinates. The stay points include the category-1 stay points and the category-2 stay points.
Operation 1107: Search for a first candidate building with a shortest distance to the stay position coordinates, and determine a first distance between building position coordinates of the first candidate building and the stay position coordinates.
Operation 1108: Determine, based on a stay time period, a first stay trajectory point and a second stay trajectory point from the trajectory points included in the movement trajectory.
Operation 1109: Average the position coordinates of the first stay trajectory point and the position coordinates of the second stay trajectory point, and use obtained average position coordinates as building entrance position coordinates.
Operation 1110: Search for a second candidate building and a third candidate building that are closest in a distance to the building entrance position coordinates, and determine a second distance between building position coordinates of the second candidate building and the building entrance position coordinates, and a third distance between building position coordinates of the third candidate building and the building entrance position coordinates.
Operation 1111: In a case that the first distance is less than a first distance threshold, the second distance is less than a second distance threshold, a distance ratio of the second distance to the third distance is less than a distance ratio threshold, and the first candidate building and the second candidate building are the same building, determine the first candidate building as a building in which a positioned object stays.
Operation 1112: Determine, based on a stay time period represented by the stay points, a wireless network signal scanned within the stay time period and a received satellite positioning signal, a valid stay time period during which the positioned object stays indoors.
Operation 1113: Mark a wireless network signal with signal strength greater than preset strength within the valid stay time period as a marked wireless network signal of the building. The marked wireless network signal includes at least one wireless network signal.
Operation 1114: Determine, in a case of performing association marking between the wireless network signal and at least one candidate building, a building quantity of candidate buildings marked with the wireless network signal.
Operation 1115: Determine, in a case that the building quantity is 1, a marking quantity of marking between the wireless network signal and the candidate building in the movement trajectories of the positioned objects.
Operation 1116: Determine, in a case that the marking quantity is greater than a marking quantity threshold, to perform marking between the wireless network signal and the candidate building.
Operation 1117: Determine, in the movement trajectories of the positioned objects in a case that the building quantity is 2, a first marking quantity of marking between the wireless network signal and a first candidate building and a second marking quantity of marking between the wireless network signal and a second candidate building. The first marking quantity is greater than the second marking quantity.
Operation 1118: Determine, in a case that a quantity ratio of the first marking quantity to the second marking quantity is greater than a quantity ratio threshold, to perform marking between the wireless network signal and the first candidate building.
Operation 1119: Obtain positioning signal information of a to-be-positioned object for object positioning.
Operation 1120: Determine, in a case that the positioning signal information is a wireless network signal, a marked wireless network signal matching the to-be-positioned object.
Operation 1121: Determine a target building through the marked wireless network signal based on the in-building positioning processing method provided in the foregoing embodiment.
Operation 1122: Determine the target building as a building in which the to-be-positioned object is located.

Specific implementations of operation 1101 to operation 1122 are similar to those in the foregoing embodiments, and details will not be described herein again.

Although the operations are displayed sequentially according to the instructions of the arrows in the flowcharts of the embodiments, these operations are not necessarily performed sequentially according to the sequence instructed by the arrows. Unless otherwise explicitly specified in this application, execution of the steps is not strictly limited, and the steps may be performed in other sequences. Moreover, at least some of the operations in the flowcharts of the various embodiments may include a plurality of operations or a plurality of stages. These operations or stages are not necessarily performed at the same moment but may be performed at different moments. Execution of these operations or stages is not necessarily performed in sequence, but may be performed in turn or alternately with other operations or at least some of operations or stages of other operations.

Based on the same inventive concept, the embodiments of this application further provide an in-building positioning processing apparatus configured to implement the foregoing in-building positioning processing method. The implementation scheme provided by the apparatus to solve the problems is similar to the implementation scheme recorded in the above method. Therefore, for specific limitations on the one or more embodiments of the in-building positioning processing apparatus provided below, refer to the limitations on the in-building positioning processing method mentioned above, and details will not be elaborated here.

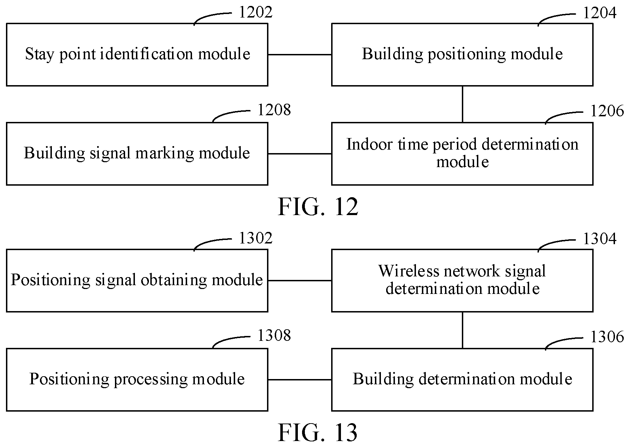

In one embodiment, as shown in FIG. 12, an in-building positioning processing apparatus is provided, including: a stay point identification module 1202, a building positioning module 1204, an indoor time period determination module 1206, and a building signal marking module 1208.

The stay point identification module 1202 is configured to: obtain a movement trajectory of a positioned object, and identify stay points from trajectory points included in the movement trajectory.

The building positioning module 1204 is configured to position, based on a position of each stay point, a building in which the positioned object stays.

The indoor time period determination module 1206 is configured to: determine, based on a stay time period represented by the stay points, a wireless network signal scanned within the stay time period and a received satellite positioning signal, a valid stay time period during which the positioned object stays indoors.

The building signal marking module 1208 is configured to: mark a wireless network signal with signal strength greater than preset strength within the valid stay time period as a marked wireless network signal of the building, and use a scanning result of the marked wireless network signal as positioning determination information for entering the building.

In one embodiment, the stay point identification module is specifically configured to: extract feature information of each trajectory point included in the movement trajectory; and identify the stay points from the trajectory points based on the feature information of each trajectory point.

In one embodiment, the feature information at least includes a positioning signal source of the trajectory point.

The stay point identification module is specifically configured to perform at least one of the following manners: using, from the movement trajectory, trajectory points with positioning signal sources that do not belong to the satellite positioning signal as the stay points; and using, from the movement trajectory, trajectory points with positioning signal sources that belong to the satellite positioning signal and positioning accuracy greater than a positioning accuracy threshold as the stay points.

In one embodiment, the feature information at least includes position coordinates and time information of the trajectory point.

The stay point identification module is specifically configured to: determine, for each trajectory point, an object movement speed of the positioned object between the trajectory point and an adjacent trajectory point through the position coordinates and time information of the trajectory point and the position coordinates and time information of the adjacent trajectory point; determine an object movement speed less than a speed threshold as a stay speed of the positioned object, and use trajectory points matching the stay speed of the positioned object as the stay points.

In one embodiment, the stay point identification module is specifically configured to: determine, for each trajectory point, an object movement speed of the positioned object between the trajectory point and an adjacent trajectory point through position coordinates and time information of the trajectory point and position coordinates and time information of the adjacent trajectory point; determine a speed change rate of the positioned object at the trajectory point through the object movement speed and a satellite measurement speed; and use trajectory points at which speed change rates are greater than a change rate threshold as the stay points. The satellite measurement speed is a speed of the positioned object measured by a satellite positioning device during acquisition of the trajectory points.

In one embodiment, the stay point identification module is specifically configured to: use a start trajectory point or an end trajectory point in the movement trajectory as a stay point.

In one embodiment, the stay points include a category-1 stay points and a category-2 stay points; the category-1 stay points includes stay points with the feature information satisfying a stay point determination condition.

The stay point identification module is further configured to: use trajectory points among the trajectory points except the category-1 stay points as candidate stay points; by using the candidate stay points as a reference, from the movement trajectory, forward extract a preset quantity of a plurality of consecutive first trajectory points, and backward extract a preset quantity of a plurality of consecutive second trajectory points; determine a first quantity of the category-1 stay points among the plurality of first trajectory points and a second quantity of the category-1 stay points among the plurality of second trajectory points; and determine the candidate stay points as the category-2 stay points in a case that the first quantity reaches a first quantity threshold and the second quantity reaches a second quantity threshold.

In one embodiment, the building positioning module is specifically configured to: average position coordinates of a plurality of stay points, and use obtained average position coordinates as stay position coordinates; search for a first candidate building with a shortest distance to the stay position coordinates, and determine a first distance between building position coordinates of the first candidate building and the stay position coordinates; and determine, in a case that the first distance is less than a first distance threshold, the first candidate building as the building in which the positioned object stays.

In one embodiment, the building positioning module is further configured to: determine, based on the stay time period, a first stay trajectory point and a second stay trajectory point from the trajectory points included in the movement trajectory; the first stay trajectory point being a former trajectory point of a start stay point within the stay time period, and the second stay trajectory point being a latter trajectory point of an end stay point within the stay time period; average the position coordinates of the first stay trajectory point and the position coordinates of the second stay trajectory point, and use obtained average position coordinates as building entrance position coordinates; search for a second candidate building and a third candidate building that are closest in a distance to the building entrance position coordinates, and determine a second distance between building position coordinates of the second candidate building and the building entrance position coordinates, and a third distance between building position coordinates of the third candidate building and the building entrance position coordinates; the second distance being less than the third distance; and determine, in a case that the second distance is less than a second distance threshold, and a distance ratio of the second distance to the third distance is less than a distance ratio threshold, the second candidate building as the building in which the positioned object stays.

In one embodiment, the building positioning module is further configured to: determine, in a case that the first candidate building and the second candidate building are the same building, the first candidate building as the building in which the positioned object stays.

In one embodiment, the indoor time period determination module is specifically configured to: perform upper and lower sliding window processing on the time information of the stay points, to obtain time information after the sliding window processing; and construct the stay time period through the time information obtained after the sliding window processing.

In one embodiment, the indoor time period determination module is specifically configured to: determine a positioning signal source of each stay point within the stay time period; the positioning signal source being the wireless network signal scanned or the received satellite positioning signal; use a former stay point at which the positioning signal source is converted from the satellite positioning signal to the wireless network signal as a first stay point, and use a stay point at which the positioning signal source is converted from the wireless network signal to the satellite positioning signal as a second stay point; and a stay moment being a time stamp in the time information corresponding to the stay point; use a time interval between a stay moment of the positioned object at the first stay point and a stay moment of the positioned object at the second stay point as the valid stay time period during which the positioned object stays indoors.

In one embodiment, the building signal marking module is specifically configured to: obtain signal strength values of the wireless network signal within each historical movement time period, and sort the signal strength values; the historical movement time period not including a stay point; and select, in a descending order, the signal strength value corresponding to the preset quantile as the preset strength of the wireless network signal.

In one embodiment, a plurality of positioned objects are provided. The marked wireless network signal includes at least one wireless network signal.

The building signal marking module is further configured to: determine, in a case of performing association marking between the wireless network signal and at least one candidate building, a building quantity of candidate buildings marked with the wireless network signal; determine, in a case that the building quantity is 1, a marking quantity of marking between the wireless network signal and the candidate building in the movement trajectories of the positioned objects; and determine, in a case that the marking quantity is greater than a marking quantity threshold, to perform marking between the wireless network signal and the candidate building.

In one embodiment, the building signal marking module is further configured to: determine, in the movement trajectories of the positioned objects in a case that the building quantity is 2, a first marking quantity of marking between the wireless network signal and a first candidate building and a second marking quantity of marking between the wireless network signal and a second candidate building; the first marking quantity being greater than the second marking quantity; and determine, in a case that a quantity ratio of the first marking quantity to the second marking quantity is greater than a quantity ratio threshold, to perform marking between the wireless network signal and the first candidate building.

In one embodiment, as shown in FIG. 13, an in-building positioning processing apparatus is provided, including: a positioning signal obtaining module 1302, a wireless network signal determination module 1304, a building determination module 1306, and a positioning processing module 1308.

The positioning signal obtaining module 1302 is configured to obtain positioning signal information of a to-be-positioned object for object positioning.

The wireless network signal determination module 1304 is configured to determine, in a case that the positioning signal information is a wireless network signal, a marked wireless network signal matching the to-be-positioned object.

The building determination module 1306 is configured to determine a target building through the marked wireless network signal based on the in-building positioning processing method provided in the foregoing embodiment.

The positioning processing module 1308 is configured to determine the target building as a building in which the to-be-positioned object is located.

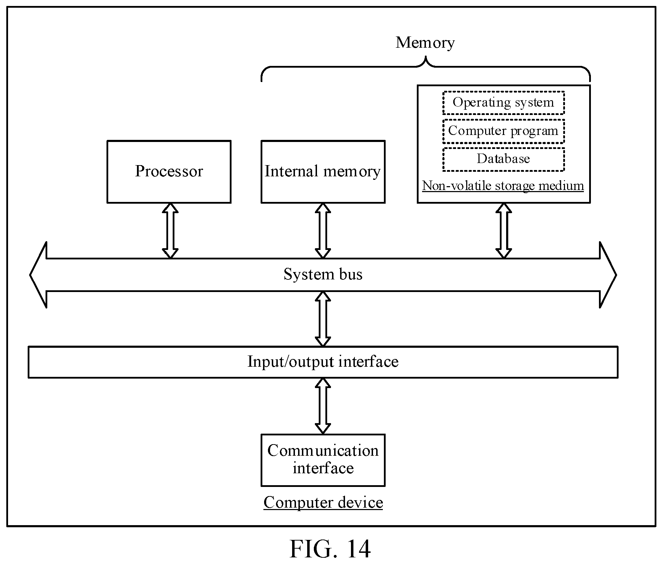

In one embodiment, a computer device is provided. The computer device may be a server or a terminal. An example in which the computer device is the server is used for description. FIG. 14 is a diagram of internal structures. The computer device includes a processor, a memory, an input/output (I/O), and a communication interface. The processor, the memory, and the input/output interfaces are connected through a system bus, and the communication interface is connected to the system bus through the input/output interface. The processor of the computer device is configured to provide computing and control capabilities. The memory of the computer device includes a non-volatile storage medium and an internal memory. The non-volatile storage medium stores an operating system, a computer program, and a database. The internal memory provides an environment for running the operating system and the computer program in the non-volatile storage medium. The database of the computer device is configured to store data related to the embodiments of this application, such as the movement trajectory and the wireless network signal. The input/output interface of the computer device is configured for exchanging information between the processor and an external device. The communication interface of the computer device is configured for being connected to and communicating with an external terminal through a network. The computer program, when executed by the processor, implement an in-building positioning processing method.

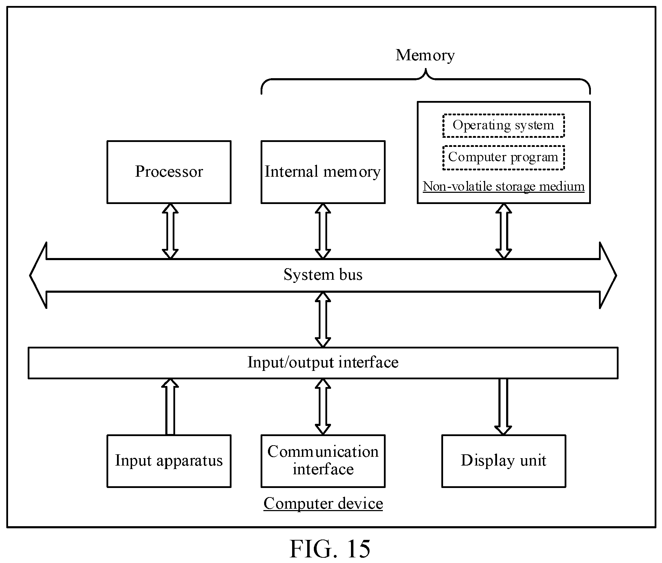

In another embodiment, a computer device is provided. The computer device may be a server or a terminal. An example in which the computer device is the terminal is used for description. FIG. 15 is a diagram of internal structures. The computer device includes a processor, a memory, an input/output interface, a communication interface, a display unit, and an input apparatus. The processor, the memory, and the input/output interface are connected through a system bus. The communication interface, the display unit, and the input apparatus are connected to the system bus through the input/output interface. The processor of the computer device is configured to provide computing and control capabilities. The memory of the computer device includes a non-volatile storage medium and an internal memory. The non-volatile storage medium stores an operating system and a computer program. The internal memory provides an environment for running the operating system and the computer program in the non-volatile storage medium. The input/output interface of the computer device is configured for exchanging information between the processor and an external device. The communication interface of the computer device is configured for conducting wired or wireless communication with an external terminal. The wireless communication may be implemented through wireless fidelity (WIFI), a mobile cellular network, near field communication (NFC), or another technology. The computer program, when executed by the processor, implement an in-building positioning processing method. The display unit of the computer device is configured to form visual pictures, which may be a display screen, a projection apparatus or a virtual reality imaging apparatus. The display screen may be a liquid crystal display screen or an e-ink display screen. The input apparatus of the computer device may be a touch layer overlaying the display screen, or may be a button, a trackball, or a touch pad arranged on a housing of the computer device, or may be an external keyboard, touch pad, a mouse or the like.

A person skilled in the art can understand that the structures shown in FIG. 14 and FIG. 15 are merely block diagrams of a partial structure related to a solution in this application, and does not constitute a limitation on the computer device to which the solution in this application is applied. Specifically, the computer device may include more or fewer components than those shown in the figure, or some components may be combined, or a different component layout may be used.

In one embodiment, a computer device is further provided, including a memory and a processor. The memory has a computer program stored therein. The processor, when executing the computer program, implements the operations in the foregoing method embodiments.

In one embodiment, a computer-readable storage medium is provided, having a computer program stored therein. The computer program, when executed by a processor, implements the operations in the foregoing method embodiments.

In one embodiment, a computer program product is provided, including a computer program. The computer program, when executed by a processor, implements the operations in the foregoing method embodiments.

Where object information (including but not limited to object device information, object personal information, and the like) and data (including but not limited to data configured for analysis, stored data, exhibited data, and the like) involved in this application are all information and data authorized by objects or fully authorized by all parties, and collection, use, and processing of relevant data need to comply with relevant laws, regulations, and standards of relevant countries and regions.

In conclusion, this application provides an in-building positioning processing method and apparatus, a computer device, a computer-readable storage medium, and a computer program product. A movement trajectory of a positioned object is obtained, and stay points are identified from trajectory points included in the movement trajectory. Since an object inevitably stays on a trajectory inside a building compared with staying outside a building, accurately identifying the stay points can provide key basis for subsequently positioning the building in which the positioned object stays, thereby avoiding a building positioning error caused by misjudgment on stay points, enhancing building positioning accuracy and reliability, and laying a firm foundation for subsequent positioning processing. The building in which the positioned object stays is positioned based on the position of each stay point. The valid stay time period during which the positioned object stays indoors is determined based on a stay time period represented by the stay points, the wireless network signal scanned within the stay time period and the received satellite positioning signal; and the wireless network signal with the signal strength greater than the preset strength within the valid stay time period as the marked wireless network signal of the building, and the scanning result of the marked wireless network signal as the positioning determination information for entering the building. Association marking is performed between the building in which the positioned object stays and the marked wireless network signal in the building. Since the marked wireless network signal is marked and confirmed based on signal strength, a signal problem caused by a change of a signal field of the wireless network signal can be avoided, thereby ensuring reliability of marking between the building and the wireless network signal, so that in-building positioning processing can be directly performed based on a reliable scanning result of the wireless network signal, and in-building positioning processing accuracy is enhanced.

Further, to identify the stay points from the trajectory points included in the movement trajectory, the feature information of each trajectory point included in the movement trajectory is first extracted. The stay points are identified from the trajectory points through the feature information of each trajectory point. The feature information of each trajectory point includes content in many aspects such as the positioning signal source, the position coordinates, the time information, the speed, the direction, and the positioning accuracy. By comprehensively extracting and analyzing the feature information, the trajectory points can be evaluated in a plurality of dimensions, to more accurately determine whether the trajectory points are the stay points, thereby avoiding a limitation of single-factor determination, enhancing stay point identification accuracy, and providing a more reliable basis for subsequent building positioning and signal marking, so that the entire positioning processing procedure is more precise and efficient.

When the feature information at least includes the positioning signal source of the trajectory point, a manner for identifying the stay points from the trajectory points based on the feature information of each trajectory point includes: using, from the movement trajectory, trajectory points with the positioning signal sources that do not belong to a satellite positioning signal as the stay points, or using and whose positioning signal source does not belong to a satellite positioning signal as the stay point, or using, from the movement trajectory, trajectory points with the positioning signal sources that belong to the satellite positioning signal and positioning accuracy greater than the positioning accuracy threshold as the stay points. The satellite positioning signal is prone to a positioning drift in an indoor scenario. When the positioning signal source of the trajectory point does not belong to the satellite positioning signal, it is likely that the positioned object is in an indoor environment. When the positioning signal source belongs to the satellite positioning signal, but the positioning accuracy is greater than the positioning accuracy threshold, it indicates that the position coordinates of the trajectory point are inaccurate, and it is probably that the positioned object is indoors or in an environment with a poor satellite signal. This manner for determination based on the positioning signal source and the positioning accuracy reduces misjudgment on the stay points caused by the indoor limitation of the satellite positioning signal, enhances stay point identification accuracy, and further enhances reliability of subsequent building positioning and signal marking.

When the feature information at least includes the position coordinates and time information of each trajectory point, the identifying the stay point from each trajectory point based on feature information of each trajectory point includes: determining, for each trajectory point, an object movement speed of the positioned object between the trajectory point and an adjacent trajectory point through the position coordinates and time information of the trajectory point and the position coordinates and time information of the adjacent trajectory point, determining an object movement speed less than a speed threshold as a stay speed of the positioned object, and using trajectory points matching the stay speed of the positioned object as the stay points. By calculating the object movement speed and comparing the object movement speed with the speed threshold, the trajectory point is determined from the perspective of a motion state, thereby avoiding an error that may occur due to determination by solely relying on the positioning signal source. This can more intuitively reflect the motion state of the positioned object, so that the stay point identification accuracy is further enhanced.

The identifying the stay points from the trajectory points based on the feature information of each trajectory point may further include: determining, for each trajectory point, an object movement speed of the positioned object between the trajectory point and an adjacent trajectory point through position coordinates and time information of the trajectory point and position coordinates and time information of the adjacent trajectory point; determining a speed change rate of the positioned object at the trajectory point through the object movement speed and a satellite measurement speed; and using trajectory points at which speed change rates are greater than a change rate threshold as the stay points. When the satellite measurement speed and a change rate of an actual movement speed of an object are greater than the change rate threshold, it indicates that a satellite signal is interfered indoors, resulting in an inaccurate measured speed. In this case, the trajectory point is used as a stay point, so that an indoor stay state of the positioned object can be captured more flexibly. Especially in a complex environment, the stay point identification accuracy and reliability are enhanced.

The identifying the stay points from the trajectory points based on the feature information of each trajectory point may also be using a start trajectory point or an end trajectory point in the movement trajectory as a stay point. When the movement trajectory starts and ends, the positioned object may be in a stay state, and the start and end trajectory points are used as the stay points to supplement possibly omitted stay points, so that identification of stay points is more comprehensive; more complete information is provided for subsequent building positioning and signal marking; the problem of inaccurate positioning caused by omission of the stay point corresponding to the start or end trajectory point is avoided; and accuracy of the entire positioning processing procedure is enhanced.

The stay points include a category-1 stay points and a category-2 stay points. The category-1 stay points includes stay points with the feature information satisfying a stay point determination condition. A method for determining the category-2 stay points includes: using trajectory points among the trajectory points except the category-1 stay points as candidate stay points; by using the candidate stay points as a reference, from the movement trajectory, forward extracting a preset quantity of a plurality of consecutive first trajectory points, and backward extracting a preset quantity of a plurality of consecutive second trajectory points; determining a first quantity of the category-1 stay points among the plurality of first trajectory points and a second quantity of the category-1 stay points among the plurality of second trajectory points; and determining the candidate stay points as the category-2 stay points in a case that the first quantity reaches a first quantity threshold and the second quantity reaches a second quantity threshold. Considering that a large quantity of category-1 stay points exist before and after the candidate stay point, the candidate stay point may be located inside an aggregation region of the category-1 stay points. It is most likely that the candidate stay point is a stay point of the positioned object. In this sliding window processing manner, noise during identification of the stay points is removed, and identification omission of an actual stay point during identification is avoided. A constructed stay time period is complete and accurate, to enhance reliability of association marking between a wireless network signal and a building, and then enhance in-building positioning processing accuracy.

The positioning, based on a position of each stay point, a building in which the positioned object stays includes: averaging position coordinates of a plurality of stay points (i.e., determining an average of position coordinates of the stay points), and using obtained average position coordinates as stay position coordinates; searching for a first candidate building with a shortest distance to the stay position coordinates (e.g., among a plurality of buildings), and determining a first distance between building position coordinates of the first candidate building and the stay position coordinates; and determining, when the first distance is smaller than a threshold (referred to as a first distance threshold), the first candidate building as the building in which the positioned object stays. Averaging the position coordinates of the plurality of stay points can reduce the impact of a position error of a single stay point on building positioning, so that the stay position coordinates can be more representative of an actual stay position of the positioned object. By searching for the first candidate building having the shortest distance to the stay position coordinates and comparing the distance with the first distance threshold, a candidate building more satisfying a condition is screened out, thereby enhancing building positioning accuracy, avoiding incorrect positioning caused by a position error of a single stay point, and providing more accurate building information for subsequent signal marking and positioning determination.

The method further includes: determining, based on the stay time period, a first stay point and a second stay point from the points included in the movement trajectory; the first stay point being a point preceding a start stay point of the stay points within the stay time period, and the second stay point being a point succeeding an end stay point of the stay points within the stay time period; determining an average of the position coordinates of the first stay point and the position coordinates of the second stay point, and using obtained average position coordinates as building entrance position coordinates; searching for a second candidate building and a third candidate building that are closest in a distance to the building entrance position coordinates (i.e., with shortest distances to the average of position coordinates among a plurality of buildings), and determining a second distance between building position coordinates of the second candidate building and the building entrance position coordinates, and a third distance between building position coordinates of the third candidate building and the building entrance position coordinates; the second distance being less than the third distance; and determining, when the second distance is smaller than a second distance threshold, and a distance ratio of the second distance to the third distance is smaller than a distance ratio threshold, the second candidate building as the building in which the positioned object stays. Considering that the positioned object may not enter the building, but is at a building entrance or at a periphery of the building. Screening determination performed through the building entrance position coordinates can more accurately determine the building in which the positioned object is located, thereby avoiding an error that may occur due to positioning by solely relying on the stay position coordinates, enhancing building positioning accuracy, especially solving the problem in positioning when the positioned object is at a special position such as the building entrance.

When the first candidate building and the second candidate building are the same building, the first candidate building is determined as the building in which the positioned object stays. In actual application, the buildings, in which the positioned object stays, determined through the building entrance position coordinates and the stay position coordinates are theoretically the same building. If the buildings are different, it indicates that a deviation occurs in the positioning result. In this case, the result with the deviation is not applied to association binding, thereby ensuring building positioning accuracy and reliability, and avoiding incorrect association caused by the positioning deviation, and making subsequent signal marking and positioning determination more accurate.

The determining, based on a wireless network signal scanned within the stay time period and a received satellite positioning signal, a valid stay time period during which the positioned object stays indoors includes: determining a source of a positioning signal detected at each stay point within the stay time period; the source being a wireless network or a satellite, i.e., the signal may be a wireless network signal detected or a received satellite positioning signal; determining a stay point preceding a stay point at which the positioning signal is switched from a satellite positioning signal to a wireless network signal as a first stay point, and determining a stay point at which the positioning signal is switched from the wireless network signal to the satellite positioning signal as a second stay point; and determining a time interval between a time point when the object is at the first stay point and a time point when the object is at the second stay point as the valid indoor stay time period during which the object stays indoors. The indoor stay time period is determined through the conversion of the positioning signal source, so that the indoor stay duration of the positioned object can be accurately identified, to provide an accurate time range is provided for subsequent marking of a wireless network signal, thereby avoiding mis-marking of an outdoor wireless network signal into an indoor wireless network signal and enhancing signal marking accuracy and reliability.

A manner for determining the preset strength includes: obtaining signal strength values of the wireless network signal (from a wireless local area network) within each historical movement time period (which is a historical time period which does no overlap with the time period corresponding to the stay points), and sorting the signal strength values; the historical movement time period not including a stay point; and selecting (e.g., in a descending order) a signal strength value at a preset quantile among the sorted signal strength values as the preset strength of the wireless network signal. By sorting the signal strength values within the historical movement time period and selecting the preset quantile, proper preset strength can be determined based on historical representation of a signal and used as a threshold, thereby avoiding mis-marking caused by an unusually high signal strength value, so that marking of a wireless network signal is more targeted and accurate. This enhances signal marking reliability and provides a more reliable signal basis for subsequent positioning determination.

When a plurality of positioned objects are provided, and the marked wireless network signal includes at least one wireless network signal, when performing association marking between the wireless network signal and at least one candidate building, a quantity of candidate buildings marked with the wireless network signal (i.e., having a relation recorded with a wireless local area network) is determined; when the quantity of candidate buildings is 1, a marking quantity of marking between the wireless network signal and the candidate building in the movement trajectories of the positioned objects (i.e., a quantity of decisions to record the relation between the wireless local area network and the candidate building based on movement trajectories of a plurality of objects) is determined; and when the marking quantity is greater than a marking quantity threshold, it is determined to perform marking between the wireless network signal and the candidate building, i.e., retaining the relation between the wireless local area network and the candidate building when the quantity of decisions is greater than a threshold. By determining the building quantity of candidate buildings and the marking quantity, more accurate association marking can be screened out. When the marking quantity is greater than the marking quantity threshold, it indicates that a confidence level of performing marking between the wireless network signal and the candidate building is high. This can further reflect real association between the wireless network signal and the building, thereby further enhancing reliability of association marking between the wireless network signal and the building, avoiding incorrect association marking, and enhancing in-building positioning processing accuracy.

The method further includes: determining, in the movement trajectories of the positioned objects when the quantity of candidate buildings is larger than one, a respective quantity of decisions to record the relation between the wireless local area network and each of the candidate buildings based on movement trajectories of a plurality of objects may be determined, and it is determined to retain a recorded relation between the wireless local area network and a first candidate building of the candidate buildings and canceling a relation between the wireless local area network and a candidate building other than the first candidate building of the candidate buildings when a ratio of a quantity of decisions corresponding to the first candidate building to a quantity of decisions corresponding to a second candidate building is greater than a threshold, the first candidate building and the second candidate building having larger quantities of decisions than other candidate buildings of the candidate buildings. For example, when the quantity of candidate building is 2, a first marking quantity of marking between the wireless network signal and a first candidate building and a second marking quantity of marking between the wireless network signal and a second candidate building; the first marking quantity being greater than the second marking quantity; and determining, in a case that a quantity ratio of the first marking quantity to the second marking quantity is greater than a quantity ratio threshold, to perform marking between the wireless network signal and the first candidate building. By determining the marking quantity and the quantity ratio, the building that is subjected to association marking with the wireless network signal can be accurately selected in a case of two candidate buildings. When the quantity ratio of the first marking quantity to the second marking quantity is greater than the quantity ratio threshold, it indicates that the association between the first candidate building and the wireless network signal is tighter. This further enhances accuracy and reliability of association marking between a signal and a building, avoids incorrect association if there are two candidate buildings, and enhancing in-building positioning processing accuracy.

Another in-building positioning processing method includes: obtaining positioning signal information of a to-be-positioned object for object positioning, determining in a case that the positioning signal information is a wireless network signal, a marked wireless network signal matching the to-be-positioned object, determining, based on the in-building positioning processing method described above, a target building through the marked wireless network signal, and determining the target building as a building in which the to-be-positioned object is located. Since the marked wireless network signal is marked and confirmed based on signal strength, a signal problem caused by a change of a signal field of the wireless network signal can be avoided, thereby ensuring reliability of marking between the building and the wireless network signal. In actual application, when the positioning signal information of the to-be-positioned object is a wireless network signal, the target building can be accurately determined through a marked wireless network signal scanned, and positioning determination is performed through a reliable scanning result of the wireless network signal, so that in-building positioning processing accuracy can be ensured. Especially, during dealing with an indoor positioning problem, a positioning error caused by unstable wireless network signals is avoided.

A person of ordinary skill in the art may understand that all or some of the procedures of the method in the foregoing embodiments may be implemented by the computer-readable instructions that instruct relevant hardware. The computer program may be stored in a non-volatile computer-readable storage medium. When the computer program is executed, the procedures of the foregoing method embodiments may be implemented. Any reference to a memory, a database, or other media used in the embodiments provided in this application can include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM), an external cache, or the like. For the purpose of illustration rather than limitation, the RAM may be in various forms, such as a static random access memory (SRAM), or a dynamic random access memory (DRAM). The databases involved in the various embodiments provided in this application may include at least one of a relational database and a non-relational database. The non-relational database may include, but is not limited to, a blockchain-based distributed database and the like. The processor involved in the embodiments provided in this application may be, but is not limited to, a general-purpose processor, a central processing unit, a graphics processing unit, a digital signal processor, a programmable logic device, an in-building positioning processing logic device, or the like.

All the technical features of the above embodiments can be combined randomly. For the sake of brevity, all possible combinations of all the technical features in the foregoing embodiments are not described. However, these technical features shall all be considered to fall within the scope of this specification as long as there is no contradiction in their combinations.

The foregoing embodiments merely express several implementations of this application. The descriptions thereof are relatively specific and detailed, but are not understood as limitations on the scope of this application. For a person of ordinary skill in the art, several transformations and improvements can be made without departing from the idea of this application. These transformations and improvements belong to the protection scope of this application. Therefore, the protection scope of the patent of this application shall be subject to the appended claims.

## Claims

1. An indoor positioning method, performed by a computer device and comprising:
obtaining a movement trajectory of a first object, and identifying stay points from the movement trajectory;
determining a building in which the first object stays based on a position of each stay point;
determining an indoor stay time period within a total time period defined by the stay points based on a change in positioning signals of the first object; and
recording a relation between the building and a wireless local area network whose signal strength within the indoor stay time period is greater than a strength threshold, the relation being used for indoor positioning.

2. The method according to claim 1, wherein identifying the stay points from the movement trajectory comprises:
extracting feature information of points in the movement trajectory; and
identifying the stay points from the points based on the feature information.

3. The method according to claim 2, wherein the feature information comprises a source of positioning signal at each of the points; and
identifying the stay points from the points based on the feature information comprises at least one of:
identifying, from the movement trajectory, a point detected using a non-satellite positioning signal as a stay point; and
identifying, from the movement trajectory, a point detected using a satellite positioning signal with a positioning accuracy greater than a threshold as a stay point.

4. The method according to claim 2 or 3, wherein the feature information comprises position coordinates and time information of the points; and
identifying the stay points from the points based on the feature information comprises:
determining, for a first point, a movement speed of the first object between the first point and an adjacent point using respective position coordinates and time information of the first point and the adjacent point; and
identifying the first point as a stay point when the movement speed is smaller than a threshold .

5. The method according to claim 2 or 3, wherein identifying the stay points from the points based on the feature information comprises:
determining a movement speed of the first object between a first point and an adjacent point using respective position coordinates and time information of the first point and the adjacent point;
determining a change rate in speed of the first object at the first point using the movement speed and a satellite-based speed of the first object at the first point; and
identifying the first point as a stay point when the change rate is greater than a threshold.

6. The method according to claim 2 or 3, wherein identifying the stay points from the points based on the feature information comprises:
identifying a start point or an end point in the movement trajectory as a stay point.

7. The method according to any one of claims 1 to 6, wherein the stay points comprise at least one category-1 stay point and at least one category-2 stay point, and the category-1 stay point having feature information satisfying a condition; and
the category-2 stay point is determined by:
using a point other than the category-1 stay point among the points in the movement trajectory as a candidate stay point;
extracting, starting from the candidate stay point, a first preset quantity of consecutive points preceding the candidate stay point and a second preset quantity of consecutive points succeeding the candidate stay point in the movement trajectory;
determining a quantity of category-1 stay points among the first preset quantity of consecutive points preceding the candidate stay point and a second quantity of category-1 stay points among the second preset quantity of consecutive points succeeding the candidate stay point; and
identifying the candidate stay point as a category-2 stay point when the first quantity reaches a first threshold and the second quantity reaches a second threshold.

8. The method according to any one of claims 1 to 7, wherein determining the building in which the first object stays based on the position of each stay point comprises:
determining an average of position coordinates of the stay points;
searching for a first candidate building with a shortest distance to the average of the position coordinates among a plurality of buildings; and
determining the first candidate building as the building in which the first object stays when the distance between the first candidate building and the average of the position coordinates is smaller than a threshold.

9. The method according to claim 8, further comprising:
determining a first stay point and a second stay point from the points in the movement trajectory, the first stay point being a point preceding a start stay point within the stay points, and the second stay point being a point succeeding an end stay point within the stay points;
determining an average of position coordinates of the first stay point and position coordinates of the second stay point;
searching for a second candidate building and a third candidate building with shortest distances to the average of position coordinates among a plurality of buildings; and
identifying the second candidate building as the building in which the first object stays when a second distance is less than a distance threshold, and a ratio of the second distance to a third distance is smaller than a ratio threshold, the second distance being a distance between position coordinates of the second candidate building and the average of position coordinates, the third distance being a distance between position coordinates of the third candidate building and the average of position coordinates, the second distance being smaller than the third distance.

10. The method according to claim 9, further comprising:
determining the first candidate building as the building in which the first object stays when the first candidate building is the second candidate building.

11. The method according to any one of claims 1 to 9, wherein determining the indoor stay time period comprises:
determining a source of a positioning signal detected at each of the stay points, the source being a wireless network or a satellite;
determining a stay point preceding a stay point at which a positioning signal is switched from a satellite signal to a wireless network signal as a first stay point, and determining a stay point at which a positioning signal is switched from a wireless network signal to a satellite signal as a second stay point; and
determining a time interval between a time point when the first object is at the first stay point and a time point when the first object is at the second stay point as the indoor stay time period .

12. The method according to any one of claims 1 to 11, further comprising:
obtaining signal strength values of the wireless local area network within a history time period which does no overlap with the time period corresponding to the stay points; and
sorting the signal strength values and selecting a signal strength value at a preset quantile among the sorted signal strength values as the strength threshold.

13. The method according to any one of claims 1 to 12, further comprises:
determining a quantity of candidate buildings having a relation recorded with the wireless local area network;
determining, when the quantity of candidate buildings is 1, a quantity of decisions to record the relation between the wireless local area network and the candidate building based on movement trajectories of a plurality of objects; and retaining the relation between the wireless local area network and the candidate building when the quantity of decisions is greater than a threshold.

14. The method according to claim 13, further comprising:
determining, when the quantity of candidate buildings is larger 1, determining a respective quantity of decisions to record the relation between the wireless local area network and each of the candidate buildings based on movement trajectories of a plurality of objects; and
retaining a relation between the wireless local area network and a first candidate building of the candidate buildings and canceling a relation between the wireless local area network and a candidate building other than the first candidate building of the candidate buildings when a ratio of a quantity of decisions corresponding to the first candidate building to a quantity of decisions corresponding to a second candidate building is greater than a threshold, the first candidate building and the second candidate building having larger quantities of decisions than other candidate buildings of the candidate buildings.

15. An indoor positioning method, comprising:
obtaining information of a positioning signal for positioning an object;
determining, when the positioning signal is from a wireless local area network, a building associated with the wireless local area network in a recorded relation as a building in which the object is located, wherein the recorded relation is generated according to the method of any one of claims 1 to 14.

16. A apparatus for indoor positioning, comprising:
a stay point identification module, configured to obtain a movement trajectory of a first object, and identify stay points from the movement trajectory;
a building identification module configured to determine a building in which the first object stays based on a position of each stay point;
an indoor time period determination module configured to determine an indoor stay time period within a total time period defined by the stay points based on a change in positioning signals of the first object; and
a recording module configured to record a relation between the building and a wireless local area network whose signal strength within the indoor stay time period is greater than a strength threshold, the relation being used for building-level positioning.

17. An apparatus for indoor positioning, comprising:
a signal obtaining module configured to obtain information of a positioning signal for positioning an object;
a positioning module configured to determine, when the positioning signal is from a wireless local area network, a building associated with the wireless local area network in a recorded relation as a building in which the object is located, wherein the recorded relation is generated according to the method of any one of claims 1 to 12.

18. A computer device, comprising a processor and a memory storing a computer program executable by the processor to implement the method according to any one of claims 1 to 15.

19. A computer-readable storage medium, storing a computer program executable by a processor to implement the method according to any one of claims 1 to 15.

20. A computer program product, comprising a computer program executable by a processor to implement the method according to any one of claims 1 to 15.
